(19) Europäisches Patentamt
European Patent Office
Office européen des brevets

(11) **EP 3 812 697 A1**

(12) **EUROPÄISCHE PATENTANMELDUNG**

(43) Veröffentlichungstag:
**28.04.2021 Patentblatt 2021/17**

(51) Int Cl.:
***G01B 9/02*** (2006.01)  ***G01B 11/06*** (2006.01)
***G01N 21/21*** (2006.01)

(21) Anmeldenummer: **19205397.3**

(22) Anmeldetag: **25.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **sentronics metrology GmbH**
**68219 Mannheim (DE)**

(72) Erfinder: **Srocka, Bernd**
**99084 Erfurt (DE)**

(74) Vertreter: **Durm Patentanwälte PartG mbB**
**Patentanwälte**
**Moltkestrasse 45**
**76133 Karlsruhe (DE)**

(54) **VORRICHTUNG UND VERFAHREN ZUR PROFILMESSUNG VON FLACHEN OBJEKTEN MIT UNBEKANNTEN MATERIALIEN**

(57) Die vorliegende Erfindung betrifft ein Verfahren und eine Vorrichtung (2) zur Profilmessung einer Objektoberfläche (40) eines flachen Objekts (20) mit unbekannten Materialien mit einem optischen Interferometrie-Messsystem (4), einem Ellipsometrie-Messsystem (5), einem Strahlaufspalter (82) zum Aufspalten eines Lichtstrahls einer Lichtquelle (111) in einen Interferometrie-Lichtstrahl (410) und einen Ellipsometrie-Lichtstrahl (420) und eine Auswerteeinheit, die dazu ausgebildet ist, aus dem in einer Detektoreinheit (250) des Interferometrie-Messsystems ausgewerteten Auswertungsstrahl (490) und einem in einem Ellipsometriesensor (220) empfangenen Sensorstrahl (520) die Profilhöhe im Messbereich auf der Objektoberfläche (40) zu ermitteln. Das Interferometrie-Messsystem (4) umfasst einen Strahlteiler (91), einen Referenzspiegel (60) und die Detektoreinheit (250). Das Ellipsometrie-Messsystem (5) umfasst einen Polarisator (190) zum Polarisieren eines Ellipsometrie-Lichtstrahls (420) und Weiterleiten auf den Messbereich auf der Objektoberfläche (40) sowie den Ellipsometriesensor (220) mit einem Polarisationsfilter, um den Polarisationszustand eines empfangenen Sensorstrahls zu bestimmen.

Fig. 1

**Beschreibung**

Die vorliegende Erfindung betrifft eine Vorrichtung zur Profilmessung von flachen Objekten mit unbekannten Materialien sowie ein entsprechendes Verfahren. Die Vorrichtung umfasst ein optisches Messsystem, das auf einer interferometrischen Messung beruht.

In mehreren Industriezweigen werden flächige Produkte mit optischen, bildgebenden Verfahren auf ihr Oberflächenprofil hin vermessen. In der Halbleiterindustrie sind dies unter anderem Wafer. Wafer sind Scheiben aus Halbleiter-, Glas-, oder Keramikmaterialien. Die Wafer werden in bestimmten Anwendungen typischerweise ganzflächig oder zumindest auf großen Teilflächen geprüft. Auf den Wafern werden die Schaltkreise "Chips" hergestellt, die später vielfältige Aufgaben in elektronischen Geräten der der Rechentechnik, Sensorik, Steuerung und Überwachung erfüllen. Während der Produktion der Chips sind vielfältige Messaufgaben zur Qualitätskontrolle erforderlich. Ein Beispiel ist die notwendige Vermessung der Ebenheit der Chipoberfläche nach den mehrfach durchzuführenden CMP-Schritten (CMP = Chemo-Mechanisches Polieren). Diese Schritte werden ausgeführt, um für nachfolgende Prozessschritte wieder eine ebene Ausgangsfläche zu haben. Die Ebenheitsanforderungen liegen dafür bei heutigen Strukturbreiten im Bereich von einigen wenigen bis 100 nm. Typischerweise haben auftretende Fehlerbilder laterale Ausdehnungen von einigen $\mu$m bis mm.

Ähnliche Profilmessaufgaben sind bei weiteren Prozessschritten zu erfüllen. So werden derzeit z.B. auch Verfahren entwickelt, mehrere Chips in einem Verbund zu stapeln. Dabei soll auf die Verwendung von erhabenen Kontaktierungsstrukturen nahezu vollständig verzichtet werden. Diese Verfahren werden sowohl für die Integration im Waferverbund als auch für einzelne Chips die jeweils auf einen noch im Waferverbund befindlichen Chip aufgesetzt werden untersucht. Auch hierfür besteht ein Bedarf für eine genaue und schnelle Profilmessung um die hohen Anforderungen an die Planarität der Oberflächen (im unteren Nanometer-Bereich) zu gewährleisten. Die typischen Größen für die Kontaktstrukturen dieser Verfahren sind Durchmesser im einstelligen $\mu$m-Bereich und Profilhöhen von wenigen nm bis einigen 10 nm.

Für die beispielhaft genannten und für ähnliche Aufgaben werden schnelle und genaue Messverfahren benötigt, die eine präzise und möglichst schnelle Messung von Höhenprofilen ermöglichen. Eine besondere Herausforderung besteht dabei darin, dass die zu vermessenden Oberflächen aus häufig wechselnden Materialien bestehen und außerdem mit einer oder mehreren transparenten Schichten bedeckt sein können. Die Profilmessung soll jedoch exakt die Oberfläche des gesamten Materialverbundes widergeben und nicht durch Materialien oder Schichtsysteme verfälscht werden. Analoge Aufgabenstellungen sind für andere Strukturen und in anderen Industriezweigen zu lösen.

Gemeinsam ist allen diesen Anwendungen der Bedarf nach präziser Prüfung der Oberflächenprofile von sehr flachen Objekten ohne Verfälschung durch darunter liegende Materialkombinationen und der Wunsch nach einer hohen Messgeschwindigkeit. Solche Objekte sind Wafer, Displays und dergleichen. Gemeinsam ist den Anwendungen weiterhin, dass die darunter liegende Materialkombinationen und die Dicken der Schicht-Strukturen häufig nicht mit ausreichender Genauigkeit bekannt ist. Gemeinsam ist den Anwendungen auch der Einsatz von Sensoren zur Erzeugung von Profil- und/oder Höhendaten der untersuchten Strukturen.

Herkömmliche Verfahren für die Höhenvermessung nutzen Punktsensoren, Zeilensensoren oder Flächensensoren. Flächige Sensoren basierend auf Verfahren wie Deflektometrie oder Weißlichtinterferometer haben den Vorteil eine Fläche im Ganzen zu erfassen. Bei der Deflektometrie wird die zu vermessende Fläche als Spiegel benutzt, durch den man eine regelmäßig strukturierte Lichtquelle betrachtet. Die Höhenvariation des Objektes schlägt sich in der Verzerrung dieses Spiegelbildes nieder und kann daraus extrahiert werden. Bei der Weißlichtinterferometrie erfolgt eine Serie von Aufnahmen mit unterschiedlichen Abständen zum Objekt oder zum Interferometerspiegel. Aus dem Signalverlauf für jeden Punkt der Aufnahme innerhalb der Serie wird dann die jeweilige Profilhöhe an diesem Punkt ermittelt. Zeilensensoren nutzen z.B. Triangulation, Stereometrie oder chromatisch konfokale Abbildung. All diesen Verfahren ist gemeinsam, dass die benutzten Signale dieser optischen Verfahren von den Materialien und auch von den ggf. vorhandenen transparenten Schichten beeinflusst werden. Ohne die exakte Kenntnis der darunter liegende Materialkombinationen und der Dicken der Schicht-Strukturen ist eine ausreichend genaue Berücksichtigung derselben z.B. in Form einer Korrektur der aufgenommenen Messwerte nicht möglich. Diese Kenntnis ist häufig nicht vorhanden. Stand der Technik ist, die kritischen Flächen mit einer dünnen Metallschicht zu überziehen und die Profilmessung darauf durchzuführen. Es besteht ein hohes Interesse, dieses als zerstörend einzustufendes Verfahren durch ein zerstörungsfreies Verfahren zu ersetzen, welches die Messaufgabe lösen kann.

Es stellt sich somit die Aufgabe, eine verbesserte Vorrichtung und ein verbessertes Verfahren vorzuschlagen, mit denen die Messung eines Oberflächenprofils eines flachen Objekts auch dann zuverlässige und genaue Ergebnisse liefert, wenn das Objekt an seiner Oberfläche unterschiedliche Materialien aufweist. Insbesondere soll eine Messung ohne eine Verfälschung durch die unter der Oberfläche liegenden Strukturen und Schichten in kürzerer Zeit mit hoher Genauigkeit erfolgen können.

Gelöst wird die vorliegende Aufgabe mit einer Vorrichtung zur Profilmessung von flachen Objekten mit unbekannten Materialien mit den Merkmalen des Anspruchs 1. Die Aufgabe wird auch gelöst durch ein System mit den Merkmalen des Anspruchs 2 sowie durch ein Verfahren mit den Merkmalen des Anspruchs 18.

Erfindungsgemäß wird die Aufgabe durch eine Vorrichtung zur Profilmessung gelöst, die neben einem optischen Interferometrie-Messsystem ein Ellipsometrie-Messsystem, einen Strahlaufspalter und eine Auswerteeinheit umfasst.

Der Strahlaufspalter spaltet einen Lichtstrahl einer Lichtquelle in einen Interferometrie-Lichtstrahl und einen Ellipsometrie-Lichtstrahl auf. Der Interferometrie-Lichtstrahl wird dem optischen Interferometrie-Messsystem zugeleitet, während der Ellipsometrie-Lichtstrahl dem Ellipsometrie-Messsystem zugeleitet wird.

Dabei hat das optische Interferometrie-Messsystem einen Strahlteiler, der den Interferometrie-Lichtstrahl der Lichtquelle in einen Referenzstrahl und einen Messstrahl aufteilt. Der Referenzstrahl wird an einem Spiegel (Referenzspiegel) des Systems reflektiert und zum Strahlteiler als Spiegelstrahl zurückgeleitet. Der Messstrahl wird auf einen Messbereich auf der Objektoberfläche des zu vermessenden Objekts geleitet und dort reflektiert. Nach Reflexion wird er als Objektstrahl zu dem Strahlteiler zurückgeleitet und interferiert hier mit dem Spiegelstrahl zu einem Auswertungsstrahl, der einer Detektoreinheit des Interferometrie-Messsystems zugeführt wird. Die Detektoreinheit ist dazu ausgerichtet, den Auswertungsstrahl zu empfangen und auszuwerten. Aus den sich ergebenden interferometrischen Überlagerungen der beiden Strahlen und der sich ergebenden Interferenzsignalintensitäten kann auf die Profilhöhe der Oberfläche geschlossen werden.

Allerdings ist dieser Wert durch die unterschiedlichen Materialien des Objekts verfälscht. Zur Korrektur dieser Interferenzsignalintensitäten werden Parameter verwendet, die mittels einer Ellipsometrie-Messung gewonnen werden.

Das hierfür eingesetzte Ellipsometrie-Messsystem umfasst einen Polarisator zum Polarisieren des Ellipsometrie-Lichtstrahls und zum Weiterleiten auf den Messbereich auf der Objektoberfläche des zu vermessenden Objekts. Ein Ellipsometriesensor hat einen Polarisationsfilter, sodass die Polarisation des empfangenen Lichtstrahls ermittelt werden kann. Somit lässt sich der Polarisationszustand des Sensorstrahls analysieren. Dabei wird also der Ellipsometrie-Lichtstrahl nach Durchgang durch den Polarisator polarisiert auf den Messbereich auf der Objektoberfläche geleitet und nach Reflexion an dem Messbereich als Sensorstrahl auf den Ellipsometriesensor gelenkt, sodass er hier nach Filterung mittels des Polarisationsfilters auftrifft.

In der Auswerteeinheit wird nun der von dem Ellipsometriesensor empfangene Sensorstrahl analysiert. Aus den Analyseergebnissen werden Parameter ermittelt, die für eine Korrektur des Messergebnisses der Interferometrie-Messung verwendet werden können. Bevorzugt sind die als Ellipsometriedaten bezeichneten Parameter Werte, die einen effektiven Brechungsindex und einen effektiven Absorptionskoeffizienten der vermessenden Materialkombination im Messbereich des Objekts widerspiegeln. Mittels dieser Ellipsometriedaten werden die in dem Interferometrie-Messsystem gemessenen Intensitäten derart korrigiert, dass auf die tatsächliche Profilhöhe der Objektoberfläche im Messbereich geschlossen und diese Profilhöhe berechnet werden kann. Somit ist es möglich, den Einfluss von unterschiedlichen Materialien der Oberfläche des Objekts zu korrigieren.

Die Erfindung ermöglicht es vorteilhafterweise durch die gleichzeitige Messung von Interferometriesignalen und Ellipsometriesignalen, Oberflächenstrukturen und deren Profile auf unbekannten Materialien bzw. Proben mit lokal wechselnden Materialien zu vermessen, ohne die Materialprobe zu zerstören oder zu verändern. Derzeit ist es Praxis, eine Probe mit einer Metallschicht zu versehen, die eine konstante Dicke hat. Hierdurch ergibt sich zwar eine Oberflächenstruktur mit einem einheitlichen Material, die der Oberflächenstruktur ohne die aufgebrachte Schicht entspricht. Allerdings ist die untersuchte Probe nach dem Metallauftrag nicht mehr verwendbar. Dieser Nachteil des Stands der Technik wird durch die vorliegende Erfindung ausgeräumt, da keine Zerstörung oder Veränderung des zu untersuchenden Objekts erfolgt.

Die Verwendung der zusätzlichen Ellipsometrie-Messung und Berücksichtigung der messbaren Polarisationseffekte erlaubt also, die durch die lokalen Materialunterschiede hervorgerufenen Phasenverschiebungen zu eliminieren. Dabei werden die ermittelten Korrekturparameter aus der Ellipsometrie-Messung verwendet.

Die Lösung der vorliegenden Aufgabe erfolgt auch durch ein System zur Profilmessung einer Objektoberfläche mit der eben beschriebenen Vorrichtung sowie einer Lichtquelle zur Erzeugung eines monochromatischen Lichtstrahls und einer Bewegungseinheit zum Ausführen einer Relativbewegung zwischen der Vorrichtung und dem zu vermessenden Objekt.

Da nicht nur ein Messpunkt oder Messbereich auf dem zu vermessenden Objekt betrachtet werden soll, muss eine Relativbewegung zwischen dem Objekt und der Messvorrichtung erfolgen. Die Relativbewegung zwischen zu vermessendem Objekt und der Messvorrichtung kann vorzugsweise durch eine Bewegung der Messvorrichtung erfolgen. Dabei kann das zu vermessende Objekt in seiner Position verharren. Alternativ oder zusätzlich kann auch das zu vermessende Objekt relativ zu der Messvorrichtung bewegt werden. Beispielsweise kann hierzu das Objekt auf einem Schlitten gehalten werden, der von einer Antriebseinheit in der gewünschten Art und Weise bewegt wird. In der Regel ist eine translatorische Bewegung in einer Dimension vorteilhaft. Werden sowohl das Messobjekt als auch die Vorrichtung beweglich ausgeführt, kann der Messbereich auf einer Objektfläche bewegt werden, sodass beispielsweise ganze Wafer automatisiert vermessen werden können. Hierdurch lässt sich das erfindungsgemäße Messverfahren, wie es im Folgenden beschrieben wird, automatisieren.

In einer bevorzugten Ausführungsform kann der Schlitten eine Halterung zur Aufnahme des Objekts umfassen, wobei die Halterung von der Bewegungseinheit bewegt wird. Beispielsweise ist es möglich, dass die Halterung oder der Schlitten in einer Vor- und Zurückbewegung bewegt wird, während die Vorrichtung in einer dazu senkrechten Bewegungsrichtung bewegt wird.

Das erfindungsgemäße Verfahren zum Erfassen einer Objektoberfläche eines Objekts mit unbekannten Materialien und zum Messen des Oberflächenprofils verwendet eine Interferometrie-Messung und eine Ellipsometrie-Messung. Ein von einer Lichtquelle ausgesandter monochromatischer Lichtstrahl wird in Richtung der optischen Vorrichtung ausgesendet und mittels eines Strahlaufspalters in einen Interferometrie-Lichtstrahl und einen Ellipsometrie-Lichtstrahl aufgespalten. Vorzugsweise können die aufgespaltenen Lichtstrahlen senkrecht zueinander sein. Der Interferometrie-Lichtstrahl wird zum Durchführen einer interferometrischen Messung verwendet, bei der der Interferometrie-Lichtstrahl an einen Messbereich der auszumessenden Objektoberfläche geleitet wird. Bei der interferometrischen Messung kann die Aufteilung des Interferometrie-Lichtstrahls in einen Messstrahl und einen Referenzstrahl erfolgen, die nach Reflexion an dem Messbereich bzw. einem Spiegel miteinander interferieren und zu einer Detektoreinheit gelangen, indem das Auswertesignal ausgewertet bzw. die Lichtintensitäten des Interferenzmusters vermessen werden.

Der aufgespaltene Ellipsometrie-Lichtstrahl wird zum Durchführen einer Ellipsometrie-Messung an dem Messbereich der Objektoberfläche verwendet, wobei bevorzugt ein optisches Interferometrie-Messsystem benutzt wird. Um die Messergebnisse zu verbessern, wird optional und bevorzugt ein Monitorsignal der Lichtquelle verwendet, um die Ausgangsintensität der Lichtquelle zu bestimmen und für die Ermittlung von Korrekturparametern aus der Ellipsometrie-Messung zu verwenden. Unter Berücksichtigung der Ausgangsintensität der Lichtquelle werden aus den Ergebnissen der Ellipsometrie-Messung Korrekturparameter berechnet. Diese Korrekturparameter umfassen vorzugsweise einen effektiven Brechungsindex und einen effektiven Absorptionskoeffizienten des Objekts an dem betrachteten Messpunkt bzw. Messbereich. Die Korrekturparameter können auch ohne Berücksichtigung der Ausgangsintensität ermittelt werden.

Ein weiterer Schritt des erfindungsgemäßen Verfahrens sieht vor, die mit der Interferometrie-Messung ermittelten Messwerte mittels der Korrekturparameter aus der Ellipsometrie-Messung zu korrigieren. Aus den korrigierten Interferometrie-Messwerten und den Korrekturparametern wird die Profilhöhe des Messbereichs an der Objektoberfläche bestimmt. Somit ist die Bestimmung der Profilhöhe an der Oberfläche eines unbekannten Materials eines Objekts möglich. Mögliche Verfälschungen der Interferometrie-Messung werden durch die Korrekturparameter korrigiert.

Durch die Verwendung der Ellipsometrie-Messung ist es nicht notwendig, ein Modell der ganzen Probe, also des zu vermessenden Objekts, zur Verfügung zu stellen. Es reicht aus, dass lediglich die gesamte effektive Wirkung der Oberfläche des unbekannten Materials messbar ist. Diese effektive optische Wirkung wird verwendet, um die auf den unterschiedlichen Materialeigenschaften beruhenden Effekte auf das Interferometrie-Messsignal zu kompensieren und so auf die tatsächliche Höhe der Oberfläche im Messbereich schließen zu können.

In einer bevorzugten Ausführungsform der Erfindung können der Strahlteiler und/oder der Strahlaufspalter als halbdurchlässiger Spiegel ausgeführt sein. Hierdurch ist es möglich, eine einfache Aufteilung eines Lichtstrahls, beispielsweise einen Interferometrie-Lichtstrahl und einen Ellipsometrie-Lichtstrahl, zu verwirklichen. Bei einer Spiegelanordnung von 45° können die beiden aufgeteilten Strahlen einen Winkel von 90° zueinander haben.

In einer weiter bevorzugten Ausführungsform ist im Strahlengang der Vorrichtung ein Objektiv vor dem Messbereich auf der Objektoberfläche des zu vermessenden Objekts vorgesehen. Das Objekt lenkt die Lichtstrahlen derart, dass der polarisierte Ellipsometrie-Lichtstrahl unter einem vorbestimmten Winkel auf den Messbereich auf die Objektoberfläche trifft und reflektiert wird. Der Messstrahl der Interferometrie-Messung trifft bevorzugt in einem rechten Winkel (oder nahezu rechten Winkel) auf den Messbereich auf der Objektoberfläche und wird ebenfalls senkrecht wieder von dem Objekt reflektiert.

In einer bevorzugten Ausführungsform der erfindungsgemäßen Vorrichtung umfasst das Ellipsometrie-Messsystem einen Spiegel im Strahlengang des Ellipsometrie-Lichtstrahls, der derart angeordnet ist, dass der Ellipsometrie-Lichtstrahl senkrecht auf den Polarisator fällt, bevor er auf das zu vermessende Objekt gelangt. Zwischen Polarisator und Objekt ist bevorzugt das Objektiv angeordnet.

Vorzugsweise umfasst die erfindungsgemäße Vorrichtung vor der Detektoreinheit des Interferometrie-Messsystems im Strahlengang eine Tubusoptik, die den Auswertungsstrahl derart fokussiert, dass der Fokuspunkt auf der Detektoreinheit bzw. der Sensoroberfläche der Detektoreinheit liegt. Vorzugsweise kann alternativ oder zusätzlich im Strahlengang des Ellipsometrie-Messsystems vor dem Ellipsometriesensor eine Tubusoptik vorgesehen sein, die den Sensorstrahl auf dem Ellipsometriesensor fokussiert, d.h. der Sensorstrahl wird so fokussiert, dass der Fokuspunkt auf der Sensoroberfläche des Ellipsometriesensors liegt.

In einer bevorzugten Ausführungsform ist die Lichtquelle des erfindungsgemäßen Systems ein Laser. Laserlicht eignet sich besonders für die Durchführung von Interferometrie- und Ellipsometrie-Messungen, da es ein monochromatisches Licht zur Verfügung stellt. Die Wellenlängen des Lichts sind hinreichend konstant und genau abgrenzbar.

Vorzugsweise umfasst die Lichtquelle des erfindungsgemäßen Systems eine Monitordiode, mittels der die Ausgangsintensität der Lichtquelle bestimmt und überwacht wird. Auf diese Weise ist eindeutig feststellbar, mit welcher Intensität das Licht der Lichtquelle in die erfindungsgemäße Vorrichtung einstrahlt, sodass die Lichtintensität für die Messungen und Auswertungen, insbesondere die Auswertung im Ellipsometrie-Messsystem, zur Verfügung stehen.

In einer bevorzugten Ausführungsform des Systems sind mehrere Lichtquellen zur Erzeugung je eines monochromatischen Lichtstrahls vorgesehen. Besonders bevorzugt weisen die Lichtstrahlen der einzelnen Lichtquellen unterschiedliche Wellenlängen auf, wobei sehr bevorzugt keine der Wellenlängen eines Lichtstrahls ein ganzzahliges Vielfaches der Wellenlänge eines anderen Lichtstrahls ist. In einer besonders bevorzugten Ausführungsform des Systems werden die Lichtstrahlen in einer Strahlformungsoptik gebündelt. Vorzugsweise ist die Strahlformungsoptik vor dem Strahlaufspalter im Strahlengang angeordnet.

Bei der Verwendung von mehreren Lichtquellen umfasst das Ellipsometrie-Messsystem vorzugsweise mehrere Ellipsometriesensoren mit Polarisationsfiltern, die zur Analyse des Polarisationszustands des empfangenen Sensorstrahls dienen. Besonders bevorzugt ist ein Ellipsometriesensor pro verwendete Wellenlänge der vorhandenen Lichtstrahlen vorhanden. In der Regel wird deshalb ein Ellipsometriesensor pro Lichtquelle eingesetzt.

Bei der Verwendung mehrerer Ellipsometriesensoren ist vorzugsweise ein optisches Auftrennelement in der erfindungsgemäßen Vorrichtung vorhanden. Das optische Auftrennelement führt eine wellenlängenspezifische Auftrennung des Sensorstrahls durch, indem die Wellenlängen aller Lichtstrahlen vorhanden sind. Auf diese Weise lassen sich die Anteile einzelner Wellenlängen heraustrennen. Vorzugsweise ist das Auftrennelement derart im Strahlengang angeordnet, dass die Anordnung des Sensorstrahls erfolgt, bevor dieser auf die Ellipsometriesensoren auftrifft.

In einer besonders bevorzugten Ausführungsform ist das optische Auftrennelement als dichroitischer Spiegel ausgeführt. Dieser ermöglicht das exakte Abtrennen einer bestimmten Wellenlänge bzw. eines Lichtstrahls einer bestimmten Wellenlänge auf einfache Weise. Werden mehr als zwei Lichtquellen mit unterschiedlicher Wellenlänge verwendet, ist bevorzugt eine Hintereinanderschaltung von mehreren Auftrennelementen vorzusehen, um mehrere Lichtstrahlen einer Wellenlänge auszukoppeln.

In einer bevorzugten Ausführungsform umfasst die Detektoreinheit der erfindungsgemäßen Vorrichtung eine Time-Delayed-Integration-Kamera. Sehr bevorzugt umfasst die Detektoreinheit eine Farb-Time-Delayed-Integration-Kamera. In einer besonders bevorzugten Ausführungsform werden mehrkanalige Zeilenkameras verwendet. Diese sind sehr bevorzugt als Time-Delayed-Integration-Mehrkanalzeilenkamera ausgeführt.

Eine weitere bevorzugte Ausführungsform der Vorrichtung sieht die Ausführung eines Ellipsometriesensors als Time-Delayed-Integration-Kamera (TDI-Kamera) vor. Vorzugsweise wird eine Zeilenkamera verwendet, sehr bevorzugt eine TDI-Zeilenkamera, besonders bevorzugt eine mehrkanalige TDI-Zeilenkamera. In einer besonders bevorzugten Variante umfasst das Ellipsometrie-Messsystem eine Vierkanal-TDI-Zeilenkamera, die besonders bevorzugt vier Polarisationsfilter aufweist. Durch die Verwendung von vier Polarisationsfiltern lässt sich der Polarisationszustand eines Lichtstrahls eindeutig ermitteln, sodass mit nur einer Ellipsometrie-Messung eine eindeutige Aussage über den Polarisationszustand des gemessenen Lichtstrahls getroffen werden kann.

Erfindungsgemäß kann die gestellte Aufgabe also dadurch gelöst werden, dass unterschiedliche Verfahrensschritte ausgeführt werden, die hier als eine bevorzugte Variante nochmals aufgelistet werden. Die Schritte sind:

a) kontinuierliches Beleuchten des Objekts mit Licht mindestens 1 monochromatischen Wellenlänge, beispielsweise einer Beleuchtungsanordnung oder Lichtquelle;

b) Durchführen einer Relativbewegung zwischen dem kombinierten Ellipsometrie-/Interferometrie-Messsystem und dem Objekt, bevorzugt kontinuierlich und ohne Unterbrechung;

c) Aufspalten des Lichtstrahls derart, dass der für die Ellipsometrie verwendete Anteil der Beleuchtung (Ellipsometrie-Lichtstrahl) die Oberfläche des Objekts unter einem Winkel trifft und linear polarisiert ist;

d) Lenken des für die Interferometrie verwendeten Anteils der Beleuchtung (Interferometrie-Lichtstrahl) derart, dass er die Oberfläche bevorzugt zumindest nahezu unter einem rechten Winkel trifft;

e) Aufnehmen der Signalintensität für mindestens 4 Polarisationsrichtungen des Lichtstrahls mit den Sensoren des Ellipsometrie-Messsystems;

f) Aufnehmen der durch das Oberflächenprofil in ihrer Intensität modulierten Signalintensitäten mit den Sensoren des Interferometrie-Messsystems;

g) Ermitteln der Werte für den effektiven Brechungsindex und den effektiven Absorptionskoeffizient der gerade vermessenen Materialkombination an jedem Messpunkt aus den Ellipsometriedaten;

h) Korrigieren der mit dem Sensor des Interferometrie-Messsystems gemessenen Intensitäten mit Hilfe der ermittelten effektiven Brechungsindizes und Extinktionskoeffizienten hinsichtlich des Einflusses der gerade vermessenen Materialkombination an jedem Messpunkt; und

i) Berechnen der Profilhöhe des Objekts aus den korrigierten Interferenzsignalintensitäten.

Bei einer solchen Anordnung werden vorzugsweise Zeilensensoren für die Interferometrie-Messung benutzt. Dadurch kann ein breiter Streifen des Objekts kontinuierlich vermessen werden. Bevorzugterweise ist ein Hauptgegenstand der Erfindung die Korrektur des Einflusses der unterschiedlichen Oberflächenmaterialien des zu vermessenden Objekts. Für viele der möglichen Anwendungen ist ein Höhen-Messbereich von einer halben Wellenlänge des benutzten Lichtes ausreichend. Für einen größeren Arbeitsbereich ist die gleichzeitige Nutzung von mehreren Wellenlängen möglich. Die grundlegende Gestaltung dieses Verfahrens ist in der Patentanmeldung EP19188318 offenbart. Details werden im Ausführungsbeispiel erläutert.

Aus der Intensitätsmessung eines durch Interferometrie modulierten Signals kann mit sehr hoher Auflösung eindeutig der Abstand zum Messobjekt ermittelt werden. Dies gilt jedoch nur, wenn die Oberfläche des Messobjektes das benutzte Licht zu 100% reflektiert oder der Reflexionsgrad und eine eventuelle Phasenverschiebung mit entsprechender Genauigkeit bekannt sind. Der Erfindung liegt die Erkenntnis zu Grunde, dass Phasenverschiebungen des reflektierten Lichtes infolge von Interferenzen der an Schichtgrenzflächen reflektierten Lichtanteile untereinander und mit dem an der Oberfläche reflektierten Licht entstehen. Da die Abweichungen in den Schichtdicken und ggf. auch im Material oft in gleicher Größenordnung wie die Variation der zu messenden Oberfläche liegen, kann man hier nicht mit nominellen Werten für das Schichtsystem rechnen. Darüber hinaus sind für sehr dünne Schichten neben der Unsicherheit für die Schichtdicken auch die optischen Materialparameter nicht ausreichend bekannt. Für Schichten, deren Dicke unterhalb der Exzitonenradien liegen (für Si z.B. ca. 20nm), weichen die Parameter aufgrund der Quanten-Confinement-Effekte von den bekannten Volumenwerten signifikant ab.

Im Rahmen der Erfindung wurde erkannt, dass eine Ermittlung des Schichtaufbaus aus dem Messsignal selbst (z.B. aus Details des Interferogramms eines Weißlichtinterferometers) nur sehr begrenzt und nur für sehr einfache Schichtaufbauten möglich ist. Die resultierende Ungenauigkeit ist hoch. Andererseits wurde erkannt, dass für eine Oberflächenprofilmessung der Schichtaufbau nicht von Interesse ist. Es genügt vielmehr, den effektiven Einfluss des Schichtstapels bzw. Materials insgesamt auf die Interferometrie zu kennen oder zu ermitteln.

Der Erfindung liegt auch die Erkenntnis zu Grunde, dass die Absorptions- und Reflexionseigenschaften eines beliebigen Schichtsystems eindeutig zu einem effektiven Brechungsindex $n_{eff}$ und einem effektiven Extinktionskoeffizient $k_{eff}$ zusammenfassen lassen. Bei genauer Kenntnis der optischen Parameter, also des Brechungsindexes und des Absorptionskoeffizienten, und der Dicken der Schichten im System können unter Anwendung der aus der Literatur hinlänglich bekannten Fresnel'schen Formeln und des Transfer-Matrix-Formalismus eindeutig der effektive Brechungsindex $n_{eff}$ und der effektive Extinktionskoeffizient $k_{eff}$ ermittelt werden. Die beiden Parameter $n_{eff}$ und $k_{eff}$ beschreiben die Reflexion an der Oberfläche vollständig, solange die Probe aus homogenem Material aufgebaut ist oder die oberste Schicht soviel des einfallenden Lichtes absorbiert, dass Reflexionen an darunter liegenden Grenzflächen keinen merklichen Einfluss auf das Messsignal haben.

Bei Vorhandensein von zumindest teilweise transparenten Schichten wird für die Beschreibung eines effektiven Ersatzsystems zusätzlich eine effektive Schichtdicke $d_{eff}$ und ein Substrat, beschrieben durch den spezifischen Brechungsindex $n_{subst}$ und Extinktionskoeffizient $k_{subst}$, benötigt. Es wurde erkannt, dass dies erforderlich ist, um den durch die Interferenzeffekte erzeugten Phasenversatz der reflektierten Lichtwelle darzustellen. Für die vollständige Beschreibung der von der zu untersuchenden Probe reflektierten Lichtwelle ist daher notwendig und ausreichend, ein Dreifach-Schichtsystem (Umgebung, effektive Schicht und Substrat) anzunehmen und dieses mit den entsprechenden Parametern $n_{eff}$, $k_{eff}$, $d_{eff}$, $n_{subst}$ und $k_{subst}$ zu charakterisieren. Für die Umgebung wird im Folgenden ohne Beschränkung der Allgemeinheit Luft angenommen mit n = 1 und k = 0.

Für die durchzuführende Profilmessung kann das Substrat-Material mit seinen Parametern $n_{subst}$ und $k_{subst}$ als bekannt vorausgesetzt werden. Es müssen also die effektiven Parameter $n_{eff}$, $k_{eff}$ und $d_{eff}$ für Brechungsindex, Extinktionskoeffizient und Substratdicke bestimmt werden, um die Interferometrie-Messwerte aus der Interferometrie-Messung ohne detaillierte Kenntnis des Schichtsystems exakt zu korrigieren und so den gesuchten, wirklichen Abstand zwischen Oberfläche des zu vermessenden Objekts und dem Sensor zu ermitteln.

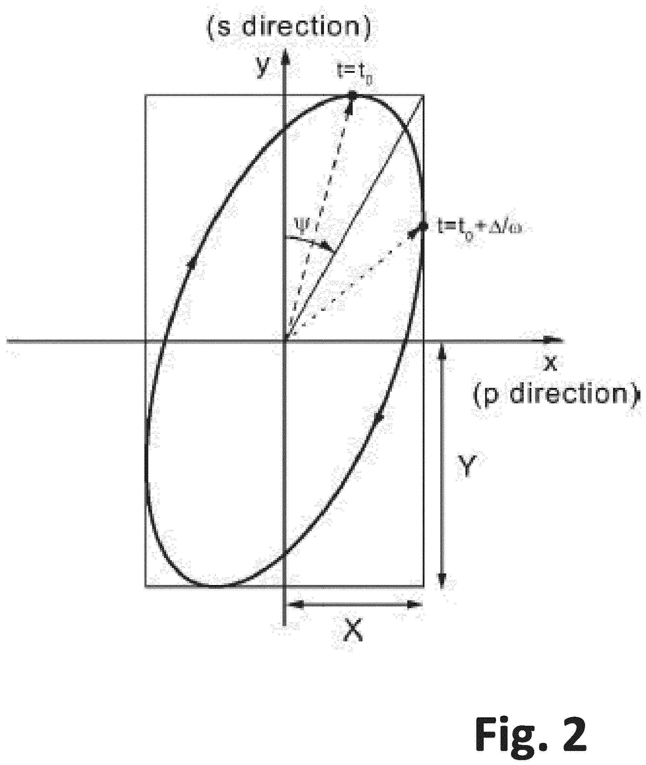

Ein Aspekt der Erfindung besteht bevorzugt darin, die Parameter $n_{eff}$, $k_{eff}$ und $d_{eff}$ durch eine zusätzliche Messung neben der Aufnahme des Interferometriesignals zu ermitteln. Dies kann vorteilhafter Weise durch eine parallel ausgeführte Ellipsometrie-Messung gelöst werden. Die Ellipsometrie misst die Änderung der Polarisation eines mit definiertem Polarisationszustand auf der Probe eintreffenden Lichtstrahls. Für ein homogenes Material ist die Nutzung der Darstellung mittels der Polarisationsellipse ausreichend. Die Polarisationsänderung wird dabei durch die Polarisationsellipse (siehe Fig. 2) dargestellt. Lage und Form der Ellipse werden in der Ellipsometrie-Messung bestimmt und durch die Werte $\Psi$ und $\Delta$ beschrieben. Der Zusammenhang zum komplexen Reflexionskoeffizient $\rho$ ist dann:

$$\rho = tan(\psi)e^{i\Delta} \qquad\qquad (1)$$

Aus $\rho$ lässt sich die komplexe Permittivität $\varepsilon$ direkt berechnen.

$$\varepsilon_r = sin^2\phi_i * \left[1 + tan^2\phi_i * \left(\frac{1-\rho}{1+\rho}\right)^2\right] \tag{2}$$

Hierbei bezeichnet $\phi_i$ den Einfallswinkel des Lichtstrahles gemessen von der Normalen der Objektoberfläche (auch als Probenoberfläche bezeichnet) im Messpunkt. Die relative Permittivität ist mit dem Brechungsindex n und dem Extinktionskoeffizienten k verbunden durch die Gleichung:

$$(n + ik)^2 = (\varepsilon_r' + i\varepsilon_r'')\mu_r \tag{3}$$

Für nicht-magnetische Materialien ($\mu_r \sim 1$) für n und k ergeben sich die Beziehungen:

$$n^2 = \frac{1}{2} * \left(\sqrt{\varepsilon_r'^2 + \varepsilon_r''^2} + \varepsilon_r'\right) \tag{4}$$

$$k^2 = \frac{1}{2} * \left(\sqrt{\varepsilon_r'^2 + \varepsilon_r''^2} - \varepsilon_r'\right) \tag{5}$$

Diese grundlegenden Zusammenhänge sind dem Fachmann prinzipiell bekannt und in einer Vielzahl von Lehrbüchern detailliert nachzulesen (z.B. Handbook of Ellipsometry, siehe Lit. (2)). Die dargestellten Relationen gelten pro Wellenlänge.

Sind eine oder mehrere transparente Schichten zu berücksichtigen, wie es im Allgemeinen für die Anwendung bei Halbleiter- oder anderen Wafern in der Halbleiterherstellung notwendig ist, ist der allgemeine Ansatz noch nicht ausreichend. Deshalb wird erfindungsgemäß der beschriebene Ansatz einer effektiven, resultierenden Schicht (beschrieben durch $n_{eff}$, $k_{eff}$ und $d_{eff}$) auf einem bekannten Substrat verwendet.

Es wird weiterhin das Wissen, über das verwendete Substrat (beschrieben durch seinen Parameter $n_{subst}$ und $k_{subst}$) genutzt. Falls diese Substrat-Parameter nicht hinreichend bekannt sein sollten, können sie bevorzugt mit der erfindungsgemäßen Vorrichtung in einer vorbereitenden Messung an einer geeigneten Stelle, an der das Substrat frei liegt (z.B. an dem Rand des Wafers oder an der Rückseite) bestimmt werden. Weiterhin wird erfindungsgemäß die Tatsache genutzt, dass sich die optische Response eines Systems aus Substrat und einer oder mehreren Material-Schichten als die eines 3-fach-Systems (Substrat, Schicht, Umgebung) mithilfe von effektiven Werten für den komplexen Brechungsindex und die Schichtdicke unter Verwendung des bekannten Transfer-Matrix-Formalismus beschreiben lässt.

In der nachfolgenden mathematischen Darstellung der Zusammenhänge werden der kürzeren Schreibweise wegen die 3 Schichten und ihre Parameter mit den Indizes 0, 1, 2 bezeichnet. D.h. für die Umgebung ist $n_0 = 1$, $k_0 = 0$; für die Ersatzschicht entspricht $n_1$, $k_1$, $d_1$ dem Set $n_{eff}$, $k_{eff}$, $d_{eff}$ und für das Substrat steht $n_2$, $k_2$ für $n_{subst}$ bzw. $k_{subst}$.

Erfindungsgemäß wird daher das genutzte monochromatische Licht in zwei Anteile aufgeteilt, wovon ein Anteil (Interferometrie-Lichtstrahl) für die Interferometrie-Messung und ein zweiter Anteil (Ellipsometrie-Lichtstrahl) für die parallel auszuführende Ellipsometrie-Messung verwendet werden. Für die auszuführende Ellipsometrie-Messung ist eine Messung mit festem Einfallswinkel und feststehender Polarisationsrichtung des einfallenden Lichtstrahles ausreichend. Zur eindeutigen Bestimmung des Polarisationszustandes des reflektierten Lichtstrahles werden bevorzugt vier Licht-Intensitäts-Messgrößen für jeweils unterschiedliche Polarisationsrichtungen des reflektierten Lichtstrahles benötigt.

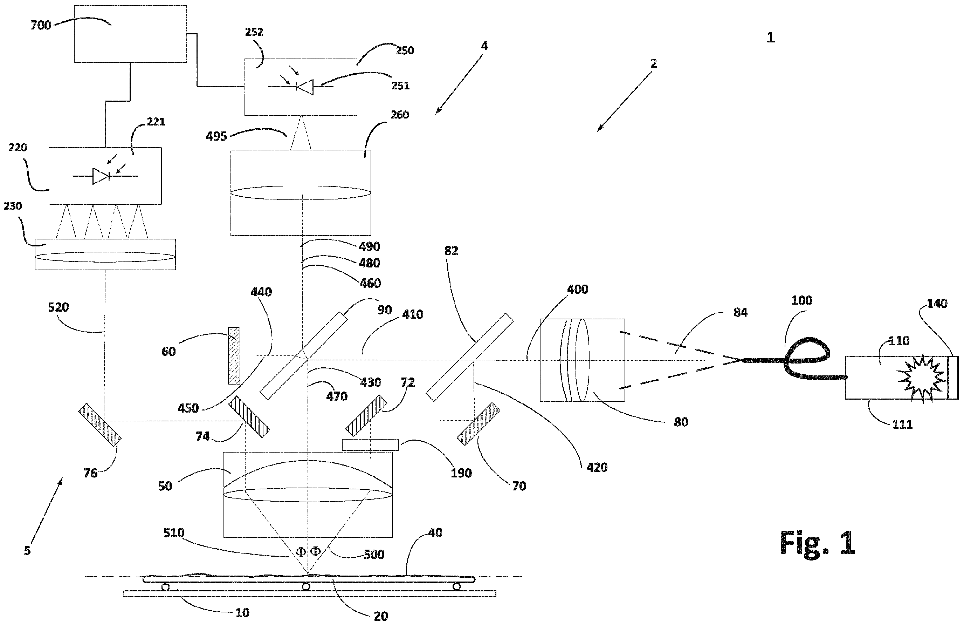

Das hier dargestellte Verfahren wird zunächst nur für ein einzelnes Detektorelement beschrieben. Es versteht sich, dass es vorteilhaft ist, sowohl für die Interferometrie als auch für die Ellipsometrie mit Zeilendetektoren zu arbeiten, um eine Vielzahl von Messpunkten gleichzeitig zu messen. Für jedes Zeilenelement sind dabei die 4 Ellipsometrie-Intensitätsmessungen und die Interferometrie-Messung separat auszuführen und die gesuchten Größen zu bestimmen. Eine mögliche Realisierung der Messvorrichtung ist beispielhaft in Fig. 1 dargestellt und weiter unten erläutert.

Nachfolgend wird die Korrektur für die Interferometriesignale und anschließend die Bestimmung der Korrekturparameter aus der Ellipsometrie ebenfalls nur für ein einzelnes Detektorelement und für eine zur Messung genutzte Wellenlänge $\lambda$ dargestellt. Um die Profilmessung mit hoher Geschwindigkeit und Präzision zu realisieren, werden vorteilhafterweise Zeilenkameras eingesetzt, die nach dem TDI-Prinzip (Time-Delayed-Integration-Prinzip) arbeiten. Für die Ellipsometrie-Messung werden bevorzugt ebenfalls geeignete TDI-Zeilenkameras verwendet. Diese besitzen 4 TDI-Blöcke mit jeweils 4 unterschiedlichen Polarisationsfiltern für das einfallende Licht. Alternativ können auch entsprechende Flächenkameras eingesetzt werden, welche anstatt eines Farb-Bayer-Pattern-Filters ein Polarisationsfilter-Set vor dem Sensor aufweisen. Ebenso ist es möglich - wenn auch mit erheblicher Geschwindigkeitseinbuße - die Messung durch Kameras ohne Filter oder mit einem Filter mit nur einer Polarisationsrichtung auszuführen, indem die Filter gewechselt und die Messungen nacheinander ausgeführt werden.

Eine mögliche bevorzugte Erweiterung ist die Nutzung von mehreren Wellenlängen. Ein solcher bevorzugter Aufbau ist für Profilhöhen vorteilhaft, deren Höhenbereich über eine halbe Wellenlänge des genutzten Lichtes hinausgeht. Im Rahmen der Erfindung wurde erkannt, dass eine Nutzung mehrerer Wellenlängen auch für flachere Profile von Vorteil ist, da sich die Zahl der Ellipsometrie-Messungen zur Bestimmung der effektiven Materialparameter der Ersatzschicht ($n_{eff}$ und $k_{eff}$) und der Schichtdicke $d_{eff}$ notwendigerweise entsprechend vervielfacht. Pro zusätzlich genutzter Licht-Wellenlänge kommen zwar zwei neue zu bestimmende, unbekannte Materialparameter hinzu (da $n_{eff}$ und $k_{eff}$ abhängig von der Wellenlänge sind), die effektive Schichtdicke ist aber für alle Wellenlängen dieselbe. Somit verbessert sich das Verhältnis von unabhängigen Messungen zur Zahl der unbekannten Größen und trägt entsprechend zur Robustheit der Messung bei.

Im Nachfolgenden wird die Interferometrie-Korrektur näher erläutert, also die Korrektur der Messwerte der Interferometrie-Messung mit den aus der Ellipsometrie-Messung gewonnenen Parametern.

Die Reflexion des für die Interferometrie genutzten Lichts an der Objektoberfläche erzeugt eine Änderung in der rückgestrahlten Amplitude, die durch den realen Reflexionskoeffizienten R beschrieben wird, und eine Phasenverschiebung der Lichtwelle, die durch den Phasenoffset $\varphi$ beschrieben wird. Die Phasenverschiebung erfolgt auf Grund von Interferenzeffekten an den Grenzflächen, die unter der Oberfläche liegen. Das am Interferometrie-Detektor ankommende Signal S kann dargestellt werden als:

$$S = q * R * \gamma * \left[1 + \cos\left(\frac{2\pi}{\lambda/2}(z_r - z_s) - \varphi\right)\right] \qquad (6)$$

Hierbei bezeichnen q die Intensität der Lichtquelle, R den realen Reflexionskoeffizient der Oberfläche des Messobjektes bei der Wellenlänge $\lambda$, $\gamma$ eine Gerätekonstante, die sich aus Detektorsensitivität und Absorptions- und Reflexionsverlusten an den Optiken ergibt, sowie $z_r$ und $z_s$ die Abstände zwischen dem Strahlteiler (Teilerspiegel) des Interferometers und dem Referenzspiegel (Spiegel an dem der Referenzstrahl reflektiert wird) bzw. der Oberfläche des Messobjektes.

Unter Nutzung der Substitutionen:

$$\Delta_z = z_r - z_s \qquad (7)$$

lässt sich die gesuchte Größe $\Delta z$ (das Profil der Probenoberfläche bezogen auf den fixen Abstand zwischen Teilerspiegel und Referenzspiegel) darstellen als:

$$\Delta z = \frac{\lambda}{4\pi}\left(\varphi + arc\cos\left(\frac{S}{qR\gamma} - 1\right)\right) \qquad (8)$$

Die aus der Messung zu ermittelnden Größen sind neben der gemessenen Signalintensität S demnach der reale Reflexionskoeffizient R an der Oberfläche des Messobjektes und die ggf. vorhandene Phasenverschiebung $\varphi$.

Die Ermittlung der Korrekturparameter aus der Ellipsometrie-Messung wird im Folgenden näher erläutert.

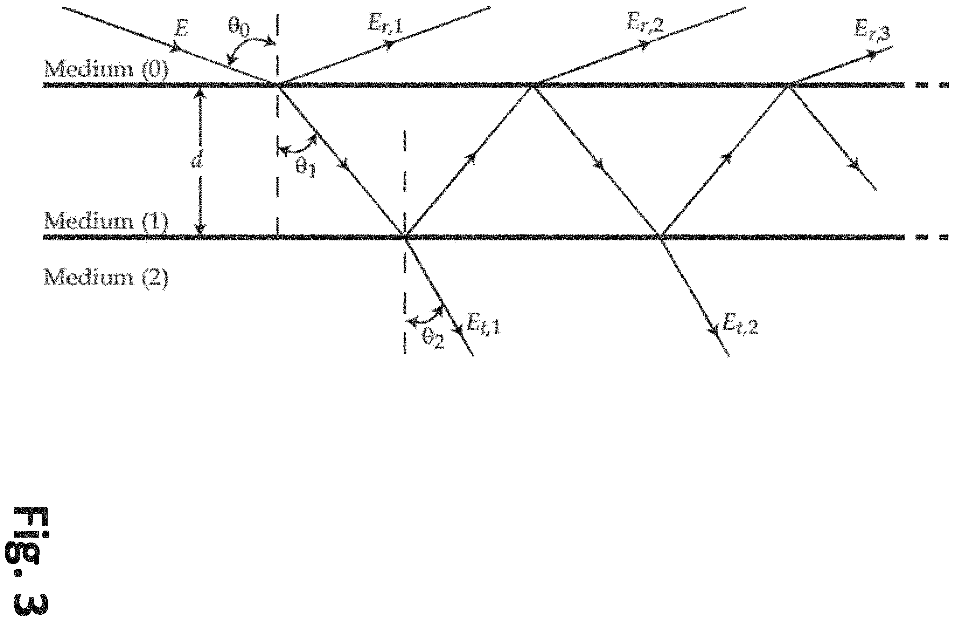

Um die Reflexion für die Lösung der sogenannten Interferenzgleichung (8) als reelle Reflexionsamplitude R und Phasenverschiebung $\varphi$ darstellen zu können, soll ein Modelschichtsystem, beispielsweise gemäß Fig. 3, mit einer Schicht $L_1$ beschrieben durch $n_1$, $k_1$ und Dicke $d_1$ (= $n_{eff}$, $k_{eff}$, $d_{eff}$) auf einem bekannten Substrat $L_2$ ($n_2$, $k_2$ bzw. $n_{subst}$, $k_{subst}$) angenommen werden. Für die Umgebung wird in dieser Darstellung - ohne Beschränkung der Allgemeinheit - Luft angenommen ($n_0 = 1$ und $k_1 = 0$). Es können selbstverständlich auch andere Materialien (zur etwaigen Nutzung des Immersionseffektes) wie Wasser oder Öl mit den entsprechenden Parametern eingesetzt werden.

Der Phasenfaktor $\beta$ für den Gangunterschied der Welle, welche die Schicht $L_1$ einmal durchlaufen hat, ergibt sich zu

$$\beta = 2\pi \frac{d_1}{\lambda} n_1^* \cos \Theta_1 \tag{9}$$

wobei $n_i^* = n_1 + i\,k_1$ der komplexe Brechungsindex von $L_1$ ist.

Die Brechungswinkel an den beiden Grenzflächen Umgebung/ Schicht $L_1$ und Schicht $L_1$/Substrat können aus dem Snellius-Brechungsgesetz berechnet werden. Mit

$$n_0^* \sin \Theta_0 = n_1^* \sin \Theta_1 = n_2^* \sin \Theta_2 \tag{10}$$

ergibt sich:

$$\cos \Theta_1 = \sqrt{1 - \frac{n_0^{*2}}{n_1^{*2}} (\sin \Theta_0)^2} \tag{11}$$

$$\cos \Theta_2 = \sqrt{1 - \frac{n_1^{*2}}{n_2^{*2}} (\sin \Theta_1)^2} = \sqrt{1 - \frac{n_0^{*2}}{n_2^{*2}} (\sin \Theta_0)^2} \tag{12}$$

Für den Phasenfaktor ergibt sich nach Einsetzen in (9)

$$\beta = 2\pi \frac{d_1}{\lambda} \sqrt{n_1^{*2} - n_0^{*2} (\sin \Theta_0)^2} \tag{13}$$

Aus den bekannten Fresnel'schen Formeln gilt für die Reflexion an der ersten Grenzfläche:

$$\rho_{01,s} = \frac{n_0^* \cos \Theta_0 - n_1^* \cos \Theta_1}{n_0^* \cos \Theta_0 + n_1^* \cos \Theta_1} \tag{14}$$

$$\rho_{12,s} = \frac{n_1^* \cos \Theta_1 - n_2^* \cos \Theta_2}{n_1^* \cos \Theta_1 + n_2^* \cos \Theta_2} \tag{15}$$

$$\rho_{01,p} = \frac{n_1^* \cos \Theta_0 - n_0^* \cos \Theta_1}{n_1^* \cos \Theta_0 + n_0^* \cos \Theta_1} \tag{16}$$

$$\rho_{12,p} = \frac{n_2^* \cos \Theta_1 - n_1^* \cos \Theta_2}{n_2^* \cos \Theta_1 + n_1^* \cos \Theta_2} \tag{17}$$

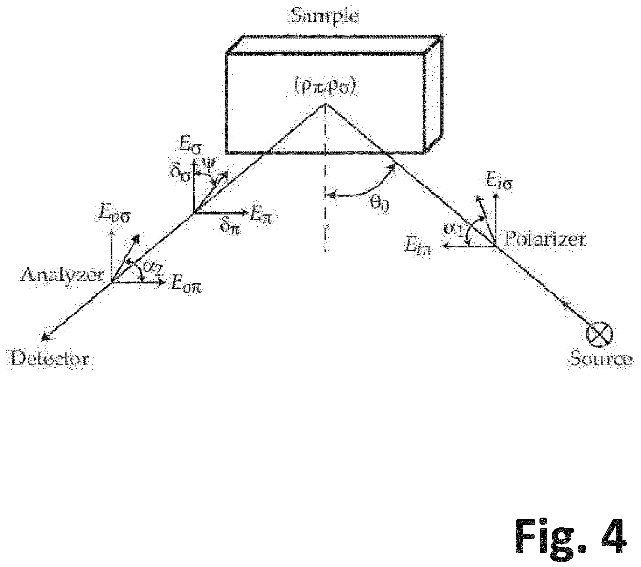

Die Indizes s und p stehen hier für den Anteil der elektrischen Amplitude der Lichtwelle, dessen Polarisationsrichtung in der Einfallsebene liegt (p=parallel) bzw. senkrecht zur Einfallsebene steht (s=senkrecht), wie in Fig. 4 mit den Index-Bezeichnungen $\pi$ und $\sigma$ dargestellt. Es ist zu beachten, dass alle mit * bezeichneten Brechungsindizes im Allgemeinen komplex sind. Die Reflexionskoeffizienten für die Amplitude der Lichtwelle $\rho_{i,k}$ sind daher im Allgemeinen ebenfalls komplexe Größen. Zur Berücksichtigung der Mehrfachreflexion an den Grenzflächen der Medien 0/1 und 1/2 nimmt man zu Hilfe, dass die reflektierten Amplituden eine geometrische Reihe bilden, deren Grenzwert direkt berechenbar ist.

Für die gesamte Reflektion an der Probenoberfläche (also an der Grenzfläche der Medien 0/1, folglich an der Grenzfläche Umgebung/Ersatzschicht) ergibt sich somit:

$$\rho_s = \frac{\rho_{01,s} + \rho_{12,s} e^{-i2\beta}}{1 + \rho_{01,s}\rho_{12,s} e^{-i2\beta}} \tag{18}$$

$$\rho_p = \frac{\rho_{01,p} + \rho_{12,p} e^{-i2\beta}}{1 + \rho_{01,p}\rho_{12,p} e^{-i2\beta}} \tag{19}$$

Diese Feldamplituden-Reflexionskoeffizienten können nunmehr direkt zur Berechnung der Licht-Intensität am Detektor eines radiometrischen Ellipsometers benutzt werden (Siehe Fig. 4). Das Ellipsometer umfasst eine Lichtquelle, einen Polarisator mit Winkel $\alpha_1$, die zu messende Probe (Objekt), einen Analysator mit Winkel $\alpha_2$ und einen Detektor.

Die resultierenden Intensitäten am Detektor lassen sich mit Hilfe des Jones-Formalismus darstellen. Im Jones-Formalismus wird der Polarisationszustand des elektrischen Feldes in einem Vektor zusammengefasst und die zeitliche Komponente der Wellenausbreitung unterdrückt. Das Elektrische Feld (ohne zeitl. Komponente) nach dem Polarisator ist gegeben durch:

$$E_i^{ps} = \begin{bmatrix} E_{ip} \\ E_{is} \end{bmatrix} = \begin{bmatrix} E_i \cos(\alpha_1) \\ E_i \sin(\alpha_1) \end{bmatrix} \tag{20}$$

Dabei sind $E_i$ die elektrische Feldamplitude der Lichtquelle und $\alpha_1$ der Winkel des Polarisators.

Die Reflektion an der Probe wird beschrieben durch die Matrix:

$$T_s^{ps} = \begin{bmatrix} \rho_p & 0 \\ 0 & \rho_s \end{bmatrix} \tag{21}$$

mit den beiden in Gl. (18) und (19) berechneten Reflexionskoeffizienten für die parallele und senkrechte Feldkomponente der am Modelsystem reflektierten Lichtwelle.

Nach Drehung des Systems in das Koordinatensystem des Analysators mittels der Rotationsmatrix R, kann die Wirkung des als ideal angenommenen Analysators durch die Matrix $T_a$ beschrieben werden:

$$R(\alpha_2) = \begin{bmatrix} \cos(\alpha_2) & \sin(\alpha_2) \\ -\sin(\alpha_2) & \cos(\alpha_2) \end{bmatrix} \tag{22}$$

$$T_\alpha = \begin{bmatrix} 1 & 0 \\ 0 & 0 \end{bmatrix} \tag{23}$$

Der Jones-Vektor am Detektor ist dann

$$E_d = T_\alpha * R(\alpha_2) * T_s^{ps} * E_i^{ps} \tag{24}$$

$$E_d = \begin{bmatrix} 1 & 0 \\ 0 & 0 \end{bmatrix} * \begin{bmatrix} \cos(\alpha_2) & \sin(\alpha_2) \\ -\sin(\alpha_2) & \cos(\alpha_2) \end{bmatrix} * \begin{bmatrix} \rho_p & 0 \\ 0 & \rho_s \end{bmatrix} * \begin{bmatrix} E_i \cos(\alpha_1) \\ E_i \sin(\alpha_1) \end{bmatrix} \tag{25}$$

$$E_d = \begin{bmatrix} \cos(\alpha_2)\rho_p \cos(\alpha_1) E_i + \sin(\alpha_2)\rho_s \sin(\alpha_1) E_i \\ 0 \end{bmatrix} \tag{26}$$

Daraus ergibt sich die Licht-Intensität am Detektor zu:

$$I_d = E_d^* * E_d \tag{27}$$

$$I_d = [cos(\alpha_2)\cos(\alpha_1)\rho_p^* E_i^* + sin(\alpha_2)\sin(\alpha_1)\rho_s^* E_i^* \quad 0]$$
$$* \begin{bmatrix} cos(\alpha_2)\rho_p \cos(\alpha_1) E_i + sin(\alpha_2)\rho_s \sin(\alpha_1) E_i \\ 0 \end{bmatrix}$$

$$I_d = cos^2(\alpha_2) * cos^2(\alpha_1)\rho_p^* E_i^* \rho_p E_i + sin^2(\alpha_2) * sin^2(\alpha_1)\rho_s^* E_i^* \rho_s E_i +$$
$$cos(\alpha_2)\cos(\alpha_1) sin(\alpha_2)\sin(\alpha_1)\left(\rho_p E_i \rho_s^* E_i^* + \rho_p^* E_i^* \rho_s E_i\right) \tag{28}$$

Wendet man diese Gleichung auf den konkreten Ellipsometrie-Fall mit $\alpha_1$=45° und misst die Intensität für die 4 Winkel $\alpha_2$ = 0, 45°, 90° und -45°, dann lassen sich die Ergebnisse schreiben als:

$$I_d = cos^2(\alpha_2)\tfrac{1}{2}\rho_p^* E_i^* \rho_p E_i + sin^2(\alpha_2)\tfrac{1}{2}\rho_s^* E_i^* \rho_s E_i + cos(\alpha_2)sin(\alpha_2)\tfrac{1}{2}\left(\rho_p E_i \rho_s^* E_i^* + \right.$$
$$\left. \rho_p^* E_i^* \rho_s E_i\right) \tag{29}$$

$$I_{d,0} = {}^1\!/_2\, \rho_p^* E_i^* \rho_p E_i \tag{30}$$

$$I_{d,45} = {}^1\!/_4\, E_i E_i^*\left(\rho_p^* \rho_p + \rho_s^* \rho_s + \rho_p \rho_s^* + \rho_p^* \rho_s\right) \tag{31}$$

$$I_{d,90} = {}^1\!/_2\, \rho_s^* E_i^* \rho_s E_i \tag{32}$$

$$I_{d,-45} = {}^1\!/_4\, E_i E_i^*\left(\rho_p^* \rho_p + \rho_s^* \rho_s - \rho_p \rho_s^* - \rho_p^* \rho_s\right) \tag{33}$$

Die Auswahl der Winkel $\alpha_1$ und $\alpha_2$ dient nur der Einfachheit der Darstellung und Berechnung. Im Sinne der Erfindung können auch geeignete andere 5 Winkel gewählt werden, mit denen sich der Polarisationszustand der Lichtwelle am Detektor vollständig bestimmen lässt.

Das Produkt $E_i^* E_i$ in (30) bis (33) ist die Eingangsintensität der Lichtquelle an der Vorrichtung, die der Ausgangsintensität an der Lichtquelle entspricht, und kann mit $I_0$ abgekürzt werden. Sie kann in der erfindungsgemäßen Vorrichtung durch eine vorbereitende Messung mit Hilfe eines idealen Spiegels oder eines bekannten Materials als Probe gemessen werden. Vorteilhafterweise wird sie zusätzlich während der Messung der zu untersuchenden unbekannten Probe (Objekt) mit Hilfe einer Monitormessung an der Lichtquelle selbst überwacht. Hierfür eignet sich z.B. die Monitordiode an einem als Lichtquelle benutzten Lasers. Es ergeben sich 4 Gleichungen für die Reflexionskoeffizienten:

$$\rho_p^* \rho_p = {}^{2I_{d,0}}\!/_{I_0} \tag{34}$$

$$\rho_p \rho_s^* + \rho_p^* \rho_s = 2\frac{2I_{d,45} - I_{d,0} - I_{d,90}}{I_0} \tag{35}$$

$$\rho_s^* \rho_s = {}^{2I_{d,90}}\!/_{I_0} \tag{36}$$

$$\rho_p \rho_s^* + \rho_p^* \rho_s = 2\frac{I_{d,0} + I_{d,90} - 2I_{d,-45}}{I_0} \tag{37}$$

Die redundante vierte Messung kann zur Verbesserung der Stabilität genutzt werden:

$$I_{d,0} + I_{d,90} = I_{d,45} + I_{d,-45} \tag{38}$$

Es ist also möglich, aus den 4 Messwerten (3 unabhängige Intensitätswerte und ein redundanter Wert) die 3 unbekannten Größen $n_{eff}$, $k_{eff}$, $d_{eff}$, aus denen die komplexen Reflexionskoeffizienten $\rho_{i,k}$ berechenbar sind, zu ermitteln. Die Eingangsintensität wird durch eine Referenzmessung und parallel durch eine Überwachung der Lichtquelle bestimmt.
Der gleiche Jones-Formalismus kann für den Interferometrie-Lichtstrahl genutzt werden, um die von der Probe reflektierte Welle zu beschreiben. Hier entfallen die Komponenten Polarisator und Analysator. Des Weiteren kann die parallel polarisierte Komponente vernachlässigt werden, da die wesentliche Strahlintensität senkrecht auf die Probe fällt.
Für die rücklaufende Welle ergibt sich somit:

$$E_{dIF} = \begin{bmatrix} \rho_s E_{iIF} \\ 0 \end{bmatrix} \tag{39}$$

Der Index "IF" steht hier für den Bezug auf den Interferometrie-Lichtstrahl. Der Index bezeichnet wieder die Lichtwelle am Detektor, der Index i die Eingangs-Lichtwelle. Die für die Interferometriegleichung (8) gesuchten Größen R und φ lassen sich daraus ermitteln:

$$R = \rho_s \rho_s^* * I_{0IF} \tag{40}$$

$$\varphi = arc \tan\left(\frac{Im(\rho_s)}{Re(\rho_s)}\right) \tag{41}$$

Bei senkrechtem Licht-Einfall und Luft als Umgebungsmedium ergibt sich:

$$\rho_{01,sIF} = \frac{1-n_1^*}{1+n_1^*} = \frac{1-n_1-ik_1}{1+n_1+ik_1} = \frac{(1-n_1-ik_1)*(1+n_1-ik_1)}{(n_1+1)^2+k_1^2} = \frac{1+n_1^2-k_1^2-i2k_1}{(n_1+1)^2+k_1^2} \tag{42}$$

$$\rho_{12,sIF} = \frac{n_1^* - n_2^*}{n_1^* + n_2^*} = \frac{n_1 - n_2 + i(k_1 - k_2)}{n_1 + n_2 + i(k_1 + k_2)}$$

$$= \frac{\left(n_1 - n_2 + i(k_1 - k_2)\right) * \left(n_1 + n_2 - i(k_1 + k_2)\right)}{(n_1 + n_2)^2 + (k_1 + k_2)^2}$$

$$= \frac{n_1^2 - n_2^2 + k_1^2 - k_2^2 + i2(k_1 n_2 - k_2 n_1)}{(n_1 + n_2)^2 + (k_1 + k_2)^2}$$

$$\tag{43}$$

$$\rho_s = \frac{\rho_{01,s} + \rho_{12,s}e^{-i2\beta}}{1 + \rho_{01,s}\rho_{12,s}e^{-i2\beta}}$$

$$= \frac{\frac{1 + n_1^2 - k_1^2 - i2k_1}{(n_1+1)^2 + k_1^2} + \frac{n_1^2 - n_2^2 + k_1^2 - k_2^2 + i2(k_1n_2 - k_2n_1)}{(n_1+n_2)^2 + (k_1+k_2)^2}e^{-i2\beta}}{1 + \frac{1 + n_1^2 - k_1^2 - i2k_1}{(n_1+1)^2 + k_1^2} * \frac{n_1^2 - n_2^2 + k_1^2 - k_2^2 + i2(k_1n_2 - k_2n_1)}{(n_1+n_2)^2 + (k_1+k_2)^2}e^{-i2\beta}}$$

$$(44)$$

Mit dieser Gleichung und (40) und (41) sind R und $\varphi$ durch $n_1$, $k_1$ und $d_1$ dargestellt. Werden diese drei Parameter der effektiven Ersatzschicht aus den Messungen der 4 Ellipsometriewerte nach den Gl. (34) bis (37) ermittelt, lassen sich demnach R und $\varphi$ berechnen. Nach Einsetzen in (8) kann somit die Abstandsdifferenz zwischen Referenzreflektor (Referenzspiegel) und Probenoberfläche jeweils zum Teilerspiegel (Strahlteiler) unter Berücksichtigung der Korrektur der materialabhängigen Reflexion an der Probe (Objekt) berechnet werden. Daraus ergibt sich das gesuchte Höhenprofil der Oberfläche.

Bei Nutzung nur einer Wellenlänge für die Interferometrie-Messung und der bisher dargestellten erfindungsgemäßen Lösung bleibt der Abstands-Arbeitsbereich der Messung auf eine halbe Wellenlänge des benutzten Lichtes eingeschränkt. Außerhalb dieses Bereiches wird der Zusammenhang zwischen Intensität und Abstand mehrdeutig, da aus der Signalintensität allein nicht unmittelbar ermittelt werden kann wie viele Perioden der Wegunterschied zwischen Referenzstrahl und Objektstrahl beträgt. Herkömmliche Interferometer lösen dies durch Ermittlung eines Referenzabstandes bei der Initialisierung und anschließender ununterbrochener Zählung der gemessenen Intensitätsperioden. Dies ist für die erfindungsgemäße Nutzung eines zeilenartigen Interferometers jedoch ungeeignet, da eine Referenz zur Verfügung stehen müsste, die auf besser als eine halbe Wellenlänge parallel zur Interferometer-Zeilenanordnung ist und es keine Stufen auf dem Messobjekt von mehr als einer halben Wellenlänge Höhe geben dürfte. Zumindest letzteres ist aber z.B. für die Vermessung der Kontaktstrukturen auf Wafern nicht gegeben.

Nutzt man hingegen zwei oder mehr unterschiedliche Wellenlängen lässt sich der Arbeitsbereich erweitern, innerhalb dessen die Messung ohne Start-Referenz und Periodenzählung eindeutig erfolgen kann. Die verschiedenen Wellenlängen weisen eine unterschiedliche Periodizität auf. Somit kann aus der Kombination der Signale der genutzten Wellenlängen in einem weiteren Bereich eine eindeutige Messung erfolgen. Grundlagen eines solchen Verfahrens sind z.B. in "Multi-Wavelength Interferometry for Length Measurements Using Diode Lasers" von K. Meiners-Hagen et all dargestellt.

Der unmittelbar erfassbare Arbeitsbereich A beträgt für zwei Wellenlängen $\lambda_1$ und $\lambda_2$ ist demnach:

$$A = \Lambda/2 = \frac{1}{2} * \frac{\lambda_1 * \lambda_2}{\lambda_2 - \lambda_1} \qquad (45)$$

Betrachtet man nicht nur den Gesamtintensitätsverlauf der synthetisierten Wellenlänge $\Lambda$, sondern die beiden Wellenlängen $\lambda_1$ und $\lambda_2$ jeweils für sich, lässt sich der Arbeitsbereich A auf ein vielfaches der Wellenlängen $\lambda_1$ und $\lambda_2$ ausdehnen (Methode der exakten Phasenbruchteile). Das in der o.g. Veröffentlichung dargestellte Verfahren kann mit der vorliegenden Erfindung kombiniert werden, indem mehrere Wellenlängen vor dem Eintritt in die Anordnung zusammengeführt werden. Das Parameter-Set $n_{eff}$, $k_{eff}$ und $d_{eff}$ wird dann zu $n_{eff,i}$ $k_{eff,i}$ und $d_{eff}$, wobei der Index i die genutzten Wellenlängen referenziert, da Brechungsindex und Absorption für jede Wellenlänge unterschiedlich sind und demnach für alle benutzten Wellenlängen bestimmt werden müssen.

Ein Aspekt der Erfindung berücksichtigt also die gleichzeitige Messung von Interferometrie-Signalen und Ellipsometriesignalen sowie die Betrachtung des Einflusses des Probenmaterials (Materials des Objekts) und des Schichtaufbaus in einem effektiven 3-Schichtsystem umfassend die Umgebung, die effektive Schicht und das Substrat.

Die Erfindung wird nachfolgend anhand einiger ausgewählter Ausführungsbeispiele im Zusammenhang mit den beiliegenden Zeichnungen näher beschrieben und erläutert. Es zeigen:

Fig. 1   eine schematische Darstellung eines erfindungsgemäßen Systems zur interferometrischen Abstandsmessung mit gleichzeitiger Aufnahme von Ellipsometriedaten;

Fig. 2   eine prinzipielle Darstellung der Polarisationsverhältnisse einer Lichtwelle mit Hilfe der Polarisationsellipse;

Fig. 3    eine schematische Darstellung der Lichtreflexion an einem 3Schicht-System bestehend aus Umgebung / transparenter Schicht / Substrat;

Fig. 4    eine schematische Prinzipdarstellung einem radiometrischen Ellipsometrie-Messsystem mit festem Polarisator, Probe und Analysator;

Fig. 5    eine Darstellung der Verfahrensschritte zur Vorbereitung eines Interferometrie-Messsystems zur interferometrischen Abstandsmessung;

Fig. 6    eine Darstellung der Verfahrensschritte zur Durchführung einer interferometrischen Abstandsmessung mittels des InterferometrieMesssystems; und

Fig. 7    eine schematische Darstellung eines erfindungsgemäßen Systems zur interferometrischen Abstandsmessung mit gleichzeitiger Aufnahme von Ellipsometriedaten unter Verwendung von 3 Licht-Wellenlängen.

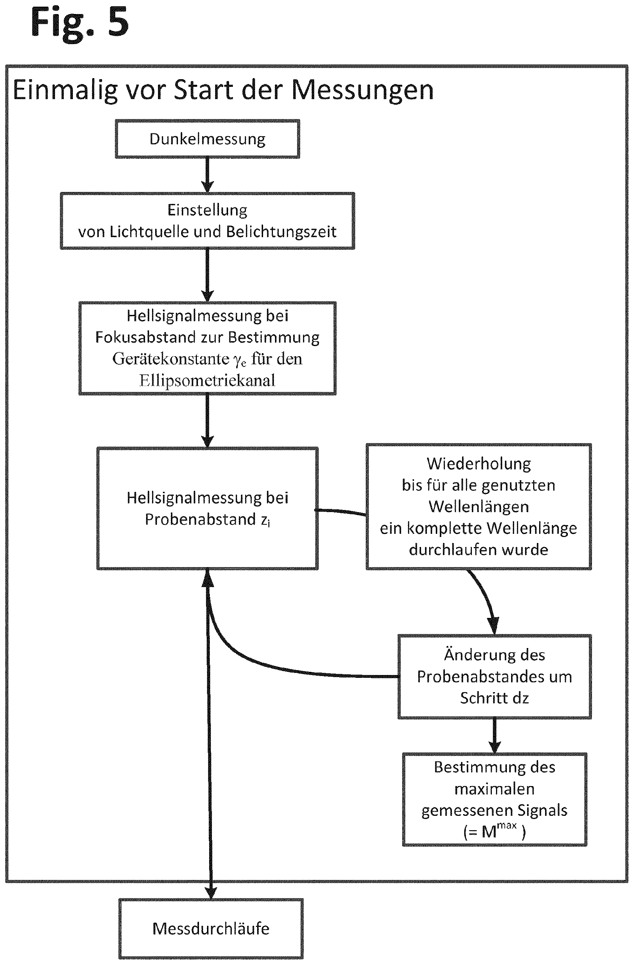

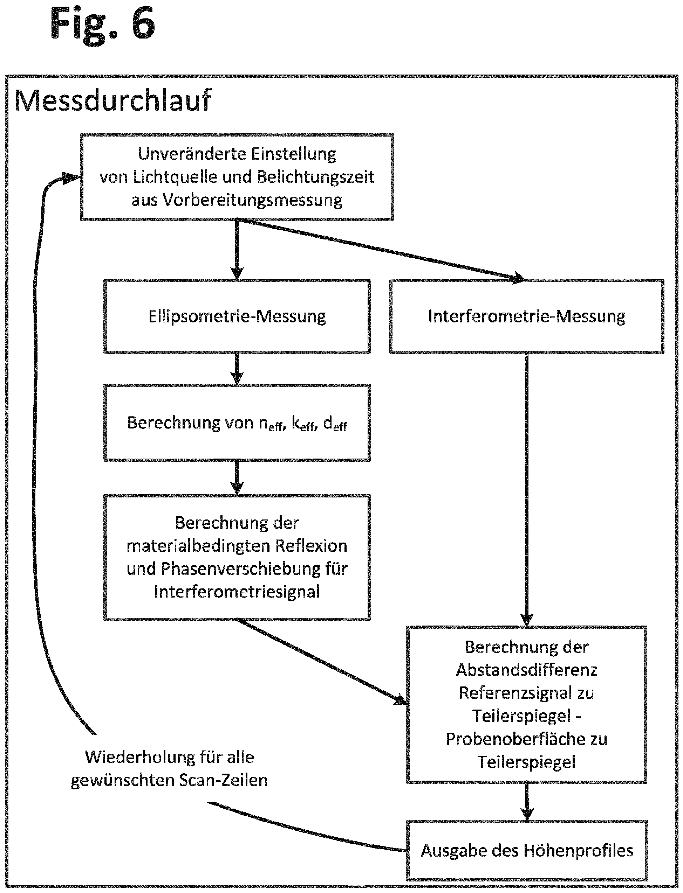

Zunächst wird der Messaufbau und Strahlengang eines erfindungsgemäßen Systems anhand der Figuren 1 bis 4 und 7 beschrieben, bevor auf den Verfahrensablauf zur Vorbereitung einer Messung mit einer bevorzugten Ausführungsform der Erfindung und auf den Verfahrensablauf zur Durchführung einer Messung in den Figuren 5 und 6 eingegangen wird.

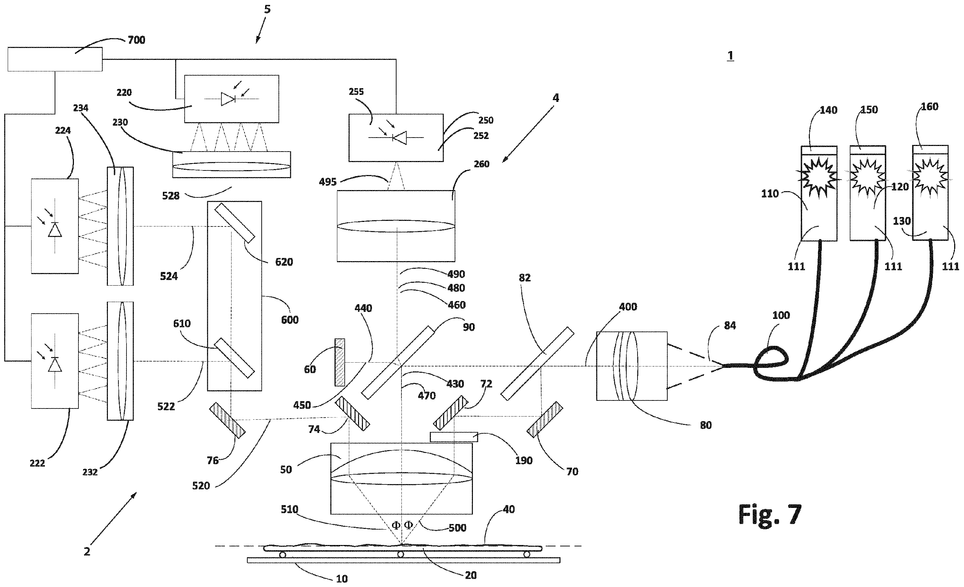

Die Figuren 1 und 7 zeigen zwei unterschiedliche Ausführungsformen eines erfindungsgemäßen Systems 1 zur Profilmessung einer Objektoberfläche 40 eines flachen Objekts 20 mit unbekannten Materialien. Das System 1 umfasst eine optische Vorrichtung 2 zur Profilmessung der Objektoberfläche 20, eine Lichtquelle 111 zur Erzeugung eines monochromatischen Lichtstrahls und eine Bewegungseinheit 10, mit der das Objekt 20 relativ zu der Vorrichtung 2 bewegt werden kann. Während die Ausführungsform des Systems 1 gemäß Fig. 1 lediglich eine Lichtquelle 111 aufweist, umfasst das System 1 gemäß Fig. 7 drei Lichtquellen 111. Entsprechend unterscheiden sich die Vorrichtungen 2 der jeweiligen Ausführungsformen.

In beiden Ausführungsformen umfasst die Vorrichtung 2 ein Interferometrie-Messsystem 4 mit einem Strahlteiler 91, einem Referenzspiegel 60 und einer Detektoreinheit 250 zum Empfangen und Auswerten eines Auswertungsstrahls 490. Das Ellipsometrie-Messsystem 5 umfasst einen Polarisator 190 und einen Ellipsometriesensor 220 für die Analyse des Polarisationszustands eines empfangenen Sensorstrahls 520. Eine Auswerteeinheit ermittelt aus den Ergebnissen der Messungen mit dem Interferometrie-Messsystem 4 und dem Ellipsometrie-Messsystem 5 die Profilhöhen der Objektoberfläche 40 des Objekts 20, z.B. eines Wafers. Dabei werden die Messergebnisse der Interferometrie-Messung mit den Korrekturparametern der Ellipsometrie-Messung korrigiert, um zuverlässige Messwerte zu erhalten, die unterschiedliche und lokal verschiedene Materialien der Objektoberfläche zu berücksichtigen.

Wafer oder andere flache Objekte 20 werden nacheinander relativ zu dem erfindungsgemäßen System 1 und einer Kamera des Systems 1 bewegt. Im vorliegenden Ausführungsbeispiel ist die Kamera stationär und die Objekte 20 werden unterhalb der Kamera hindurchbewegt mittels der Bewegungseinheit 10. In einem anderen Ausführungsbeispiel wird bevorzugt die Kamera bewegt. In einem alternativen Ausführungsbeispiel wird bevorzugt die Relativbewegung auf Kamera und Objekt 20 aufgeteilt, so dass zum Beispiel die Kamera die Bewegung in einer Achsenrichtung ausführt, während das Objekt 20 in der dazu senkrechten Richtung bewegbar ist. Die Bewegung zwischen Kamera und Objekt 20 ist bevorzugt kontinuierlich.

Das Ausführungsbeispiel in Fig. 1 verwendet eine Laserdiode 110 als Lichtquelle 111, eine TDI-Zeilenkamera 251 (TDI = time delayed integration) als Detektoreinheit 250 für das Interferometriesignal (hier Auswertungsstrahl 490) und eine TDI-Mehrkanal-Zeilenkamera 221 mit integrierten Polarisationsfiltern (nicht dargestellt) als Ellipsometriesensor 220 für einen als Ellipsometriesignal ausgebildeten Sensorstrahl 520. Es kann jedoch auch eine andere Anzahl von Lichtquellen 111 verwendet werden. Ebenso kann alternativ eine breitbandigere Lichtquelle 111 in Kombination mit schmalbandigen Filtern benutzt werden. Auch können anstelle der TDI-Sensoren auch einfache (Mehrkanal)-Zeilensensoren (ohne TDI-Verfahren) oder Flächenkameras oder ein Set von mehreren Zeilenkameras benutzt werden.

Im Ausführungsbeispiel in Fig. 1 wird das Licht der Laserdiode 110 durch einen Faserkoppler 100 der Messanordnung (Vorrichtung 2) zugeführt. Das Licht tritt aus dem Faserkoppler 100 als Lichtstrahl 84 aus. Die Übertragung über einen Lichtleiter dient lediglich der Entkopplung der Laser 110 vom eigentlichen Aufnahmesystem, also der Vorrichtung 2. Anstelle der Lichtleiterübertragung können die (Laser-)Lichtstrahlen 84 auch direkt über geeignete Optik in die Aufnahmeeinheit (Vorrichtung 2) gelenkt werden, was Verluste reduziert, jedoch einen höheren Justageaufwand erfordert.

Mit einer Strahlformungsoptik 80 wird der Lichtstrahl 84 zu einem parallelen Lichtbündel (Lichtstrahl 400) mit an die Aufnahmefläche angepasstem Querschnitt geformt. Der Lichtstrahl 400 (Lichtbündel) wird durch einen Strahlaufspalter 82, der als 50% teildurchlässiger Spiegel ausgebildet ist, in die zwei Teilbündel, nämlich einen Interferometrie-Lichtstrahl 410 und einen Ellipsometrie-Lichtstrahl 420, aufgeteilt. Die Aufteilung muss nicht zu 50/50 erfolgen. Sie kann auch zu anderen Anteilen erfolgen und so entsprechend der Empfindlichkeitsanforderungen der Strahlengänge und Sensoren angepasst werden.

Der Interferometrie-Lichtstrahl 410 wird durch einen Strahlteiler 91, der als 50% teildurchlässiger Spiegel 90 ausgebildet ist, zum Teil als Teilbündel über ein Objektiv 50 auf die zu messenden Objektoberfläche 40 gelenkt. Dieses Teilbündel ist Messstrahl 430. Die anderen 50% des Interferometrie-Lichtstrahls 410 passieren den teildurchlässigen Spiegel 90 als Referenzstrahl 440. Der Referenzstrahl 440 trifft dann auf einen Referenzspiegel 60, wo es reflektiert wird. Das so entstehende, zurücklaufende Teilbündel (Spiegelstrahl 450) wird wieder zu 50% am teildurchlässigen Spiegel 90 reflektiert und läuft als Teilbündel 460 zu einem Interferometriedetektor 252, nämlich zu der Detektoreinheit 250.

Der auf die Objektoberfläche 40 des Wafers gelenkte Messstrahl 430 wird durch das Objektiv 50 auf das Abbildungsgebiet fokussiert. Durch die Reflexion an der Objektoberfläche 40 wird der Messstrahl 430 durch das Objektiv 50 als Objektstrahl 470 zurück reflektiert. Die Hälfte des Lichtes aus Objektstrahl 470 passiert den teildurchlässigen Spiegel 90 und läuft weiter als Bündel 480 zum Interferometriedetektor 252. Das Licht der beiden Bündel 460 und 480 interferiert miteinander zu Auswertungsstrahl 490. Der Auswertungsstrahl 490 ist nunmehr durch die Interferenz der Lichtwellen entsprechend des Abstandsunterschieds zwischen teildurchlässigem Spiegel 90 und Referenzspiegel 60 einerseits sowie teildurchlässigem Spiegel 90 und Objektoberfläche 40 andererseits in seiner Intensität moduliert. Der Auswertungsstrahl 490 wird durch Tubusoptik 260 als Bündel 495 auf die TDI-Zeilenkamera 251 fokussiert. Die Detektoreinheit 250 nimmt also das abstandsmodulierte Interferometriesignal auf.

Der Ellipsometrie-Lichtstrahl 420 wird hier durch zwei 100% Spiegel 70 und 72, durch den in seiner Winkellage justierbaren Polarisator 190 als Bündel 500 und durch das Objektiv 50 hindurch auf die Objektoberfläche 40 unter einem mittleren Einfallswinkel $\Phi$ gelenkt. Das von der Oberfläche 40 reflektierte Lichtbündel 510 gelangt durch das Objektiv 50 und über die Spiegel 74 und 76 als Sensorstrahl 520 zur Tubusoptik 230 und wird von dieser auf den 4-kanaligen Ellipsometriesensor 220 fokussiert. Der Ellipsometriesensor 220 ist in vorliegendem Beispiel ein 4-kanaliger TDI-Zeilensensor, der vor jedem der 4 TDI-Blöcke ein Polarisationsfilter montiert hat. Die Polarisationsfilter sind so in geeigneter Weise ausgerichtet, dass der Polarisationszustand des einlaufenden Lichtes (Sensorstrahl 520) vollständig analysiert werden kann (beispielsweise in den Winkeln 0°, 45°, 90° und -45°). Damit können in den jeweils 4 Detektorelementen, die eine Spalte des Ellipsometriesensors 220 bilden, vier Ellipsometriesignale so aufgenommen werden, dass der Polarisationszustand des in dieser Spalte einlaufenden Lichtes aus diesen vier Signalen vollständig bestimmt werden kann.

Zur Überwachung der Intensität der Lichtquelle 111 wird mittels Monitordiode 140 die Laser-Ausgangsleistung dauernd kontrolliert und gemessen.

In Fig. 7 ist eine alternative Anordnung gemäß der vorliegenden Erfindung dargestellt, bei der zur Verbesserung der Robustheit der Messung und/oder zur Erweiterung des eindeutigen Arbeitsbereiches drei Wellenlängen verwendet werden. Die drei Wellenlängen werden durch Laser 110, 120 und 130 (Laserdiode) erzeugt und mittels der Monitordioden 140, 150 und 160 in ihrer Intensität überwacht. Durch einen bevorzugt gespleißten Faserkoppler 100 werden die Lichtstrahlen der einzelnen Laserdioden zu einem Lichtstrahl 84 zusammengeführt und bevorzugt gebündelt. Abweichend von der Anordnung in Fig. 1 wird hier in Fig. 7 für die Interferometrie-Messung eine Multi-Farb-TDI-Zeilenkamera 255 eingesetzt, um die Signale getrennt für die drei Wellenlängen aufzunehmen. Ebenso abweichend werden die Ellipsometriesignale zur Messung mittels eines Auftrennelements 600 aufgetrennt. Die Ellipsometriesignale werden bevorzugt mittels zweier dichroitischen Spiegel 610 und 620 in die drei Wellenlängenbestandteile zerlegt und als Strahlen 522, 524 und 528 durch die Tubusoptiken 232, 234 und 230 geleitet und schließlich mittels der Ellipsometrie-Sensoren 220, 222 und 224 gemessen.

Diese Darstellung ist eine prinzipielle Anordnung, die selbstverständlich in vielfacher Weise arrangiert werden kann. So kann z.B. die Reihenfolge von Strahlzerlegung (610, 620) in die Wellenlängenbestandteile und Fokussierung mittels Tubusoptik (232, 234 und 230) umgedreht werden.

Anhand von Fig. 5 und 6 wird eine bevorzugte Ausführungsform des erfindungsgemäßen Verfahrens beschrieben, die bevorzugt zunächst einige vorbereitende Schritte umfasst. Zur Vorbereitung der Messung sind erfindungsgemäß folgende vorbereitenden Schritte vorgesehen (siehe Fig. 5):

1) Messung des Dunkelsignals bei abgeschalteter Lichtquelle 111 zur Bestimmung des Dunkelsignals der Detektoren;

2) Einstellen der Lichtquelle 111 auf eine vorgegebene Arbeitshelligkeit;

3) Messung der Reflexion an einem 100% Spiegel als Probe zur Bestimmung der Gerätekonstante $\gamma$ in Gl. (8);

4) Messung der Reflexion an einem 100% Spiegel bzw. an einem bekannten, homogenen Material als Probe zur Bestimmung der Gerätekonstante $\gamma_e$ für das Ellipsometrie-Messsystem 5.

Zur Durchführung der eigentlichen Messung, bevorzugt mittels des erfindungsgemäßen Systems 1, sind erfindungsgemäß folgende Schritte pro Messpunkt vorgesehen.

1) Gleichzeitige Messung des Interferometriesignals, des Monitorsignals und der Ellipsometriesignale an dem gewünschten Messpunkt der Objektoberfläche, also Empfangen und Auswerten des Auswertungsstrahls 490 und des Sensorstrahls 520;

2) Berechnung von $\rho_s$ und $\rho_p$ aus den 4 gemessenen Intensitätswerten des Ellipsometriekanals und dem Monitor-Wert für die Lichtquelle 111;

3) Berechnung von effektiven Parametern $n_{eff}$, $k_{eff}$ und $d_{eff}$ aus $\rho_s$ und $\rho_p$ unter Nutzung des Einfallswinkels $\Theta_0$ des Ellipsometriekanals und der vorgegebenen Parameter $n_{Subst}$, $k_{Subst}$ des Substrates des Objekts 20;

4) Berechnung von $\rho_s$ für den senkrechten Lichteinfall des Interferometriekanals aus $n_{eff}$, $k_{eff}$ und $d_{eff}$;

5) Berechnung von R und $\varphi$ aus $\rho_s$ für senkrechten Lichteinfall;

6) Berechnung der Abstandsdifferenz $\Delta z$ zwischen Referenzreflektor und Probenoberfläche jeweils zum Strahlteiler 91 (Teilerspiegel);

7) Berechnung der Profilhöhe am Messpunkt (bezogen auf den Abstand des Referenzspiegels).

Im Anschluss an die Messung mit der Vorrichtung 2 und dem darin umfassten Interferometrie-Messsystem 4 und Ellipsometrie-Messsystem 5 erfolgt die Signalauswertung in der Auswerteeinheit 700.

Die nachfolgende Erläuterung der Berechnung des Oberflächenprofiles wird zur Vereinfachung der Darstellung mit nur einer Wellenlänge ausgeführt. Bei Verwendung mehrerer Wellenlängen gelten die Gleichungen für jede Wellenlänge separat in analoger Weise. Ebenso wird die Darstellung nur für jeweils ein Pixel-Set, d.h. für eine Zeilenposition der vorteilhaft genutzten Zeilenkameras ausgeführt. Die Gleichungen gelten in analoger Weise für jedes Pixel-Set an der jeweiligen Zeilenposition. Ein Pixel-Set bezeichnet hier die zur gleichen Zeilenposition gehörenden Pixel in der Interferometrie-Kamera und in der Ellipsometrie-Kamera.

Es ist somit möglich entsprechend der Sensorgröße und Anordnung eine Vielzahl von Höhenpunkten des Profils gleichzeitig zu ermitteln. Für eine Zeilenkamera mit heute verfügbaren 16384 Punkten pro Zeile sind dies entsprechend 16384 Höhenwerte für jeden Auslesetakt der Kameras. Weiterhin kann man bei der hier beschriebenen Vorrichtung und System 1 die Zeilenkameras kontinuierlich relativ zum Wafer (Objekt) bewegen. Man erhält entsprechend der Taktgeschwindigkeit der Kameras entsprechend viele Zeilen mit Höheninformationen pro Zeiteinheit. Bei einem Takt der vorgeschlagenen Mehrkanal-TDI-Zeilenkameras 221 von z.B. 100 kHz erhält man also mehr als 1600 Mio. Höhenwerte pro Sekunde. Solche Kameras werden von verschiedenen Herstellern angeboten (z.B. von Vieworks und von Dalsa Teledyne). Die Verwendung derartiger TDI-Mehrkanalzeilenkameras ist eine besonders geeignete Variante, da sich so sehr hohe Messgeschwindigkeiten erzielen lassen. Diese Kameras enthalten mehrere (in der Regel 4) TDI-Blöcke in einer Kamera, die sich simultan betreiben und auslesen lassen. Bei Einsatz solcher Kameras wird die Aufnahme der genutzten Wellenlängen, die zu einer Zeile auf der Waferoberfläche gehören, nacheinander erfolgen. D.h. während der erste TDI-Block den Zeilenbereich bei $\lambda_1$ aufnimmt, ermittelt der zweite TDI-Block das Signal bei $\lambda_2$ und der dritte TDI-Block das Signal $\lambda_3$. Für die nachfolgend dargestellte Berechnung ist dieser zeitliche Versatz prinzipiell unerheblich. Es müssen lediglich die erhaltenen Signalbilder zeitlich gestaffelt (entsprechend dem räumlichen Versatz der TDI-Blöcke) zugeordnet und ausgewertet werden. Mit dieser Anordnung lässt sich besonders gut hohe Signalqualität (entsprechend hoch aufgelöste und robuste Messung) mit hoher Geschwindigkeit vereinbaren. Alternative Anordnungen werden weiter unten erläutert.

Der Ablauf der Messung und Ihrer Vorbereitung ist in den Figuren 5 und 6 illustriert. Für eine korrekte Bestimmung der Höhenwerte muss die Messung mittels einer Dunkelsignalmessung und einer Bestimmung der Übertragungsfunktion der Optik und Sensorik vorbereitet werden.

In der Dunkelsignalmessung wird bei abgeschalteter Lichtquelle das Signal d an jedem Kamerapixel y der beiden Kamerazeilen (Ellipsometriesensor 220 und Detektoreinheit 250) gemessen. Damit wird das sogenannte Dunkelrauschen der Kamera bestimmt, welches für jede weitere Messung ein Offset darstellt und vom Signal abgezogen wird. Dies wird für beide Sensoranordnungen 220 (Index z=1 bis 4) und 250 (Index z=5) durchgeführt.

$$d_{yz} = ausgelesener\ Signal - Dunkelwert\ am\ pixel\ y\ des\ Sensors\ z$$

Zur Bestimmung der optischen und elektrischen Transferfunktion der Anordnung wird eine Hellsignalmessung h mit einem 100%-Spiegel durchgeführt. Dazu wird die Waferoberfläche bzw. Objektoberfläche 40 durch einen ebenen Spiegel mit bekannten Reflexionseigenschaften ersetzt. Da das Signal h an jedem Sensorpixel eindeutig durch die Intensität der Lichtquelle 111 (Signalwert q), die Transferfunktion M, den Reflexionsgrad des Spiegels R, die Wegdifferenz $l_z$ der beiden interferierenden Lichtbündel 460 und 480 (auftreffend auf Detektoreinheit 250 = Sensor, z = 5) und das Dunkelsignal d bestimmt ist, lässt sich bei bekannten Werten h, q, r, und d die Transferfunktion M für jedes Pixel y in jeder der Sensorzeilen z ermitteln.

Für den Interferometriesensor, also die Detektoreinheit 250 (z=5) ist dies eine Funktion der Wegdifferenz $l_z$. Für die Ellipsometriesensoren 220 (z=1 bis 4) ist M unabhängig von der Probenhöhe, solange man sich innerhalb des Fokusbereichs bewegt. Die Transferfunktion ist im Allgemeinen für jeden Pixel y und jeden Sensor z unterschiedlich. Sie wird bestimmt durch die Empfindlichkeit der einzelnen Pixel, durch die Ausleuchtung, Materialeigenschaften, die Beschichtungen und Abbildungsfehler der Optik.

Um die Ausgangsintensität der Laser-Lichtquelle 111 zu überprüfen und in die Rechnung als Korrektur- bzw. Referenzwert einfließen zu lassen, wird das Signal q, der üblicherweise in jedem Lasermodul 110 eingebauten Monitordiode 140 (auf der dem Ausgang abgewandten Seite des Lasers) direkt benutzt.

Das Signal h der Hellreferenzmessung ist für den Interferometrie-Sensor (Detektoreinheit 250):

$$h_{yz,href}(l_z) = q_{href} * M_{yz}(l_z) * R_{href} + d_{yz} \tag{46}$$

Dabei sind:

$h_{yz,href}(l_z)$ = Messwert derReferenzmessung am pixel y des Sensors z

(Interferometersensor 250 [z = 5], Ellipsometriesensor 220 [= 1... 4]) als Funktion der Wegdifferenz $l_z$

$q_{href}$ = Lichtintensität der Laserquelle während der Referenzmessung

$M_{yz}(l_z)$ = Transferfunktion am pixel y des Sensors z als Funktion der Wegdifferenz $l_z$

$R_{href}$ = Reflexionsgrad des Spiegels in der Referenzmessung (bekanntes Material)

Das Argument $l_z$ bezeichnet hierbei die Wegdifferenz, die die beiden interferierenden Bündel 460 und 480 (auftreffend auf Sensor 250, z = 5) zueinander haben. Der Reflexionsgrad R kann hierbei als reelle Größe angesetzt werden, da für die Referenzmessung vorteilhafter Weise ein Spiegel gewählt wird, der keinen Phasenversatz infolge Schichtreferenzen erzeugt.

Will man zur Verbesserung der Langzeitstabilität z.B. einen Spiegel mit Schutzbeschichtung einsetzen, so hat der durch die Schutzschicht erzeugte Phasenversatz keine Auswirkung, da die Referenzmessung nur verwendet wird, um das Maximum der Transferfunktion zu bestimmen.

Für den Ellipsometriesensor 220 gilt:

$$h_{yz,href} = q_{href} * M_{yz} * R_{href} + d_{yz} \tag{47}$$

Für den Ellipsometriekanal ist zu beachten, dass ein Phasenversatz am Spiegel z.B. durch eine etwaige Schutzbeschichtung in der Ermittlung der Transferfunktion rechnerisch berücksichtigt werden muss.

Zur Bestimmung des Abstandes der Waferoberfläche von der Sensoranordnung $z_{sample}$ wird die Transferfunktion M(I) in einen nicht-interferierten Faktor $M^{max}$ und die Interferenzwirkung zerlegt werden. Den Faktor $M^{max}$ erhält man, indem für jede Transferfunktion M(I) das Maximum bestimmt wird. Die Intensitätsmodulation durch die Interferenz lässt sich dann direkt aus den Werten des Messdurchlaufs ermitteln.

Für den Sensor der Detektoreinheit 250 gilt die Transferfunktionen:

$$M_{yz}(l_z) = M_{yz}^{max} * \left( 1 + cos\left[ \frac{2\pi}{\lambda/2} * (z_{mirror} - z_{sample}) \right] \right) \tag{48}$$

Und für den Ellipsometriesensor 220 ist $M_{yz}$ innerhalb des Fokusbereichs konstant.

Dabei sind:

$M_{yz}(l_z)$ = Transferfunktion am pixel y des Sensors z als Funktion der

Wegdifferenz $l_z$ $M_{yz}^{max} = maximaler$ Wert der Transferfunktion am pixel y des Sensors z

$z_{mirror}$ = Abstand Teilerspiegel - Referenzspiegel des Interferometers

$z_{sample}$ = Abstand Teilerspiegel - Waferoberfläche

Daraus ergibt sich für den Interferometriesensor (Detektoreinheit 250):

$$M_{yz}^{max} = \frac{h_{yz,href}(l_{z\,für\,h_{max}})-d_{yz}}{q_{href}*R_{href}} \tag{49}$$

Dabei ist:
$l_{z\,für\,h_{max}}$ = die Wegdifferenz, bei der das Signal am Sensor z maximal ist = $l_z$ ein ganzzahliges Vielfaches der Wellenlänge $\lambda$ ist

Die Bestimmung von $M^{max}$ erfolgt indem man den Abstand $z_{sample}$ des zur Messung benutzten Spiegels kontinuierlich verändert und so eine volle Wellenlängen-Periode durchläuft, dabei das Signal aufnimmt und das Maximum ermittelt.

Im Messdurchlauf mit der zu untersuchenden unbekannten Waferoberfläche (Objektoberfläche 40) werden nunmehr gleichzeitig die Sensorsignale $i_{y1}$ bis $i_{y4}$ der Ellipsometrie-Kamerasensoren 220 [z=1...4] und $i_{y5}$ des Interferometriesensors (Detektoreinheit 250) [z=5] aufgenommen sowie die Ausgangsintensitäten q der Laser-Lichtquelle 111 mittels der eingebauten Monitordiode 140 gemessen.

Für die Signale an den Sensorblöcken in Kamera (Ellipsometriesensor 220) gilt:

$$i_{yz} = q * M_{yz} * r_{yz,wafer} + d_{yz} \tag{50}$$

Dabei sind:

$i_{yz}$ = Ellipsometrie -/ InterferometrieMesswert am Pixel y des Sensors z

$q$ = eingestrahlte Lichtintensität

$M_{yz}$ = Transferfunktion am pixel y des Sensors z

$r_{yz,wafer}$ = Reflexionscoeffizient des wafers am Ort des pixels y bei Polarisationswinkel z

$d_{yz}$ = ausgelesener Dunkel - Signalwert am pixel y des Sensors z

Die Reflexionskoeffizienten $r_{y,wafer}$ ergeben sich hierbei gemäß den Gleichungen (30) bis (33) aus den Materialeigenschaften der Probe und bei den entsprechend gewählten Polarisationswinkeln. Nunmehr werden aus diesen Messungen mit Hilfe der Gleichungen (34) bis (37) und (13) bis (19) die das Probenmaterial beschreibenden Größen $n_{1,y} = n_{eff,y}$, $k_{1,y} = k_{eff,y}$ und $d_{1,y} = d_{eff,y}$ berechnet, wobei in das Gleichungssystem (34) bis (37) die mit $q=I_0$ umgeformten Intensitätswerte $I_{d,z} = I_{d,Polarisationswinkel}$ eingesetzt werden:

$$I_{d,z}/I_0 = \frac{i_{yz}-d_{yz}}{M_{yz}} \tag{51}$$

Die so ermittelten Materialwerte können nunmehr nach Gleichung (43) zur Bestimmung von $\rho_{s,y5}$, dem komplexen Reflexionskoeffizienten für senkrechten Lichteinfall am Ort des pixels y des Interferometriesensors [z=5] genutzt werden. Aus $\rho_{s,y5}$ lassen sich nach den Gleichungen (40) und (41) schließlich der (reelle) Reflexionsgrad $R_y$ und der Phasenversatz $\varphi_y$ für jeden Pixelort y ermitteln. Für die an der Detektoreinheit 250 gemessenen Intensitäten ergibt sich

damit:

$$i_{y5} = q * R_y * M_{y5}^{max} * \left[1 + \cos\left(\frac{2\pi}{\lambda/2}\left(z_{mirror,y} - z_{sample,y}\right) - \varphi_y\right)\right] + d_{y5} \quad (52)$$

Hieraus lässt sich schließlich die gesuchte Größe $\Delta z_y = Z_{mirror,y} - Z_{sample,y} =$ die Differenz des Abstandes der Probenoberfläche 40 zum Abstand des Referenzspiegels 60 vom (Teiler-)Spiegel 90 errechnen:

$$\Delta z_y = \varphi_y + \frac{\lambda/2}{2\pi} arc \cos\left[\frac{i_{y5} - d_{y5}}{q * R_y * M_{y5}^{max}} - 1\right] \quad (53)$$

Setzt man, wie in Fig. 7 dargestellt, mehrere, z.B. bevorzugt drei, Wellenlängen ein, um den Messbereich zu vergrößern und/oder die Robustheit der Messung zu verbessern, muss man die bis hier dargestellte Berechnung pro Wellenlänge separat ausführen. Die Abstandsdifferenzwerte $\Delta z_{xy}$ werden dabei zunächst in Einheiten der jeweiligen halben Wellenlänge $\lambda_x$ aus Gl. (51) bestimmt, wobei x der Index der Wellenlängen ist. Sie lassen sich dann nach der sogenannten Methode der exakten Phasenanteile jeweils als Summe aus ganzzahligen Anteilen $\delta_x$ und dem gebrochenen Rest $f_x$ darstellen:

$$\Delta z_{yx} = \frac{\lambda_x}{2} * (\delta_x + f_x) = \varphi_{xy} + \frac{\lambda_x/2}{2\pi} arc \cos\left[\frac{i_{xy5} - d_{xy5}}{q_x * R_{xy} * M_{xy5}^{max}} - 1\right] \quad (54)$$

Die gesuchte Abstandsdifferenz $\Delta z_y$ ermittelt man aus den $\Delta z_{yx}$ indem man das Triple $\delta_x$ ganzzahliger Anteile ermittelt, für welches die mittlere Abweichung der zugehörigen $\Delta z_{yx}$ vom jeweiligen Mittelwert minimal ist und anschließend den Mittelwert für die 3 verbleibenden gebrochenen Anteile berechnet.

Durch geeignete Wahl der Wellenlängen $\lambda_1$, $\lambda_2$ und $\lambda_3$ für x = 1,2,3 lässt sich ohne Schwierigkeiten ein Arbeitsbereich von 0,5 mm mit eindeutiger Zuordnung der Intensitätsmesswerttripel $i_{xy5}$ zur Abstandsdifferenz $\Delta z_y$ herstellen, was für eine Vielzahl von Profilmessaufgaben ausreichend ist. Dies ist in der eingangs genannten Veröffentlichung von K.Meiners-Hagen, R. Schrödel, F. Pollinger und A. Abou-Zeid detailliert erläutert. In der darin bekannt gemachten Anordnung werden beispielsweise die Wellenlängen 532, 632 und 780 nm verwendet und es wird ein Arbeitsbereich von 0,6 mm mit eindeutiger Zuordnung der Abstandsdifferenz erreicht.

Im Folgenden werden weitere bevorzugte Ausführungsformen der Erfindung beschrieben. Diese alternativen bevorzugten Ausführungsvarianten sind ohne Beschränkung der Allgemeinheit Bestandteil der Erfindung.

So dient der Einsatz der TDI-Technik in der vorgeschlagenen Anordnung lediglich der Verbesserung des Signal-Rauschverhältnisses und ist für das erfindungsgemäße Prinzip nicht zwingend notwendig. Für einfachere Messkonfigurationen und Anforderungen kann daher anstelle von TDI-Mehrkanal-Kamerazeilensensoren als Ellipsometriesensoren 220, 222, 224 auch eine Anordnung aus 4 unabhängigen Zeilensensorkameras oder von 4 unabhängigen, einkanaligen TDI-Zeilensensorkameras gewählt werden.

Alternativ können auch übliche Flächenkameras eingesetzt werden oder TDI-Einkanalzeilenkameras, die im Flächenauslesungsmodus betrieben werden. Bei einer solchen Anordnung verringert sich die Taktfrequenz entsprechend auf z.B. einen Takt von 1 kHz (für den beschriebenen Flächenauslesungsmodus einer TDI- Einkanalzeilenkameras) und man erhält immer noch mehr als 16 Mio. Höhenwerte pro Sekunde.

Es versteht sich, dass bei Nutzung von Flächenkameras oder TDI-Einkanalzeilenkameras im Flächenauslesungsmodus die drei Wellenlängen $\lambda_1$, $\lambda_2$ und $\lambda_3$ auf den Kamerasensoren auf unterschiedliche Zeilen x = 1, 2, 3 abgebildet werden. Die Zuordnung der erhaltenen Signalbilder zueinander für die drei Wellenlängen die jeweils den gleichen Punkt auf der Waferoberfläche 40 betrachten, erfolgt hier durch eine räumliche Zuordnung der Bereiche des Kamerasensors. Für die prinzipielle oben dargestellte Auswertung ist es unerheblich, ob die Zuordnung räumlich (bei flächigen Sensoren) oder zeitlich gestaffelt (bei Zeilensensoren) erfolgt.

Es ist zu beachten, dass für lateral hochauflösende Anwendungen (z.B. im einstelligen $\mu$m-Bereich) durch den Einsatz mehrerer Kameras ohnehin eine laterale und rotatorische Korrektur für die aufgenommenen Signalbilder erforderlich ist, da eine Justage der gesamten Mess-Anordnung auf einen Versatz der Kamera von weniger als 1$\mu$m mechanisch kaum erreichbar ist. Eine solche mathematische Korrektur kann üblicherweise durch die Aufnahme eines Referenzmusters ermöglicht werden, aus dem der genaue Ort auf dem Wafer, der von jedem Pixel betrachtet wird, ermittelt werden kann.

In weiteren möglichen Ausführungsvarianten kann die Zahl der eingesetzten Wellenlängen an den benötigten Arbeitsbereich angepasst werden. Für besonders kleine Arbeitsbereiche ist bereits eine Ausführung mit nur einer Wellenlänge möglich oder für kleine Bereiche mit zwei Wellenlängen. Für größere Arbeitsbereiche oder eine Verbesserung der Zuverlässigkeit durch Redundanz der Messung bietet sich die Ausdehnung auf drei oder mehr Wellenlängen an, die insbesondere mit der oben genannten Multi-Block-TDI-Kameras realisiert werden kann (es wurden bereits Kameras mit 7 TDI-Blöcken vorgestellt).

Die Beleuchtung kann geeignet mit kontinuierlich strahlenden, monochromatischen Lichtquellen erfolgen. Laser sind dafür ebenso geeignet wie andere breitbandigere Strahlquellen, welche mit entsprechenden Interferenzfiltern kombiniert sind. Einzige Bedingung ist, dass die Kohärenzlänge des eingesetzten Lichtes für den zu realisierenden Arbeitsbereich ausreichend groß ist.

Die Zusammenführung der Strahlung bei Nutzung von verschiedenen Wellenlängen kann durch verspleißte Lichtwellenleiter oder dichroitische Spiegel erfolgen. Verspleißte Lichtwellenleiter sind Lichtwellenleiter, die in einem bestimmten Abschnitt miteinander verschmolzen sind oder eng nebeneinander geführt werden, so dass das Licht von einem Lichtwellenleiter in den anderen Lichtwellenleiter übertritt. Bei dichroitischen Spiegeln wird nur das Licht eines bestimmten Wellenlängenbereiches reflektiert, während das Licht mindestens eines anderen Wellenlängenbereiches hindurchgelassen wird. Solche Spiegel können für den Einsatz bei verschiedenen Winkeln dimensioniert sein. Die häufigste Nutzung geschieht bei 45°. Bei geeigneter Anordnung kann so das abgehende reflektierte Licht und das durchgelassene Licht die gleiche Ausbreitungsrichtung besitzen.

Für die Trennung der Lichtstrahlen unterschiedlicher Wellenlänge im Ellipsometrie-Strahlengang können anstelle der dichroitischen Spiegel auch ein oder mehrere Prismen, Gitter oder andere spektral dispersiven Mittel genutzt werden. Durch die räumliche Trennung können die Signale simultan aufgenommen werden, was eine hohe Messgeschwindigkeit erlaubt. Es kann aber auch eine zeitliche Trennung durch eine nacheinander stattfindende Ausführung der Messung bei den verschiedenen Wellenlängen erfolgen, wobei eine größere Messzeit in Kauf genommen wird.

Ebenso kann anstelle des Strahlteilers 91 bzw. eines Spiegels 90 ein geklebtes Prisma mit quadratischem Querschnitt genutzt werden, welches in der geklebten 45°-Fläche mit einer teilverspiegelnden Schicht versehen ist. Bei Verwendung eines solchen Prismas kann der Referenzarm durch Aufdampfen einer Verspiegelung direkt auf die Außenfläche des Prismas erzeugt werden. Diese Anordnung führt zwar wegen der deutlich unterschiedlichen Dispersion im Referenz- und Messarm des Interferometers zu einer Verringerung des Interferenzkontrastes, ist aber für einfache Anforderung aufgrund seiner Robustheit vorteilhaft.

Insbesondere kann vorgesehen sein, dass die optische Anordnung zur Erzeugung von Interferenz einen halbdurchlässigen Spiegel umfasst, welcher einen Teil der Strahlung an einer ersten Oberfläche in Richtung auf die Objektoberfläche reflektiert und einen anderen Teil der Strahlung durchlässt. Die reflektierte Strahlung kann anschließend mit dem durchgelassenen Strahl vereinigt werden. Dies kann beispielsweise erfolgen, indem der durchgelassene Strahl an einem Spiegel in sich zurückreflektiert wird und an dem halbdurchlässigen Spiegel in den reflektierten Strahl eingekoppelt wird. Eine solche Anordnung nennt man Michelson-Interferometer. Es sind jedoch auch andere Anordnungen, wie z.B. ein sogenanntes Mach-Zehnder-Interferometer möglich und nutzbar, bei dem das eingestrahlte Licht aufgeteilt und nach der Reflexion eines Teilstrahles an der Probenoberfläche wieder vereinigt wird.

Weitere bevorzugte Varianten sind bereits in der Patentanmeldung EP19188318 ausgeführt, die hier als Referenz in vollem Umfang einbezogen werden soll.

Literatur

(1) "Multi-Wavelength Interferometry for Length Measurements Using Diode Lasers", K. Meiners-Hagen, R. Schrödel, F. Pollinger, A. Abou-Zeid, Measurement Science Review, Vol. 9, Sect. 3, 01.11.2009

(2) "Handbook of Ellipsometry", Harland G. Tompkins, Eugene A. Irene, Springer 2005, ISBN 0-8155-1499-9

**Patentansprüche**

1. Vorrichtung zur Profilmessung einer Objektoberfläche (40) eines flachen Objekts (20) mit unbekannten Materialien, mit:

   a) einem optischen Interferometrie-Messsystem (4) umfassend
   einen Strahlteiler (91) zum Aufteilen eines Interferometrie-Lichtstrahls (410) einer Lichtquelle (111) in einen Referenzstrahl (440) und einen Messstrahl (430);
   einen Referenzspiegel (60) zur Reflexion des Referenzstrahls (440);
   eine Detektoreinheit (250) zum Empfangen und Auswerten eines Auswertungsstrahls (490) des Interferometrie-Messsystems (4);

wobei

der Messstrahl (430) zur Reflexion auf einen Messbereich auf der Objektoberfläche (40) geleitet wird und nach Reflexion als Objektstrahl (470) zu dem Strahlteiler (91) geleitet wird;

der Referenzstrahl (440) an dem Spiegel reflektiert und als Spiegelstrahl (450) zu dem Strahlteiler (91) geleitet wird;

der Objektstrahl (470) und der Spiegelstrahl (450) nach Auftreffen auf den Strahlteiler (91) interferieren und als Auswertungsstrahl (490) der Detektoreinheit (250) zum Auswerten zugeführt werden;

b) einem Ellipsometrie-Messsystem (5) umfassend

einen Polarisator (190) zum Polarisieren eines Ellipsometrie-Lichtstrahls (420) und Weiterleiten des Ellipsometrie-Lichtstrahls (420) auf den Messbereich auf der Objektoberfläche (40);

einen Ellipsometriesensor (220, 222,224) mit einem Polarisationsfilter, der zur Analyse des Polarisationszustands eines empfangenden Sensorstrahls (520) ausgebildet ist;

wobei der Ellipsometrie-Lichtstrahl (420) auf den Messbereich auf der Objektoberfläche (40) geleitet wird und nach Reflexion an dem Messbereich der Objektoberfläche (40) als Sensorstrahl (520) auf den Ellipsometriesensor (220, 222, 224) trifft;

c) einem Strahlaufspalter (82) zum Aufspalten eines Lichtstrahls (84, 400) einer Lichtquelle (111) in den Interferometrie-Lichtstrahl (410) und den Ellipsometrie-Lichtstrahl (420); und

d) einer Auswerteeinheit (700), die dazu ausgebildet ist, aus dem in der Detektoreinheit (250) ausgewerteten Auswertungsstrahl (490) und dem in dem Ellipsometriesensor (220, 222, 224) empfangenen Sensorstrahl (520) die Profilhöhe im Messbereich auf der Objektoberfläche (40) zu ermitteln.

2. System zur Profilmessung einer Objektoberfläche (40) eines flachen Objekts (290) mit unbekannten Materialien, umfassend

eine Lichtquelle (111) zur Erzeugung eines monochromatischen Lichtstrahls (84, 400);

die optische Vorrichtung (2) nach Anspruch 1; und

eine Bewegungseinheit (10) zum Ausführen einer Relativbewegung zwischen der Vorrichtung (2) und dem zu vermessenden Objekt (20).

3. System nach Anspruch 2, **dadurch gekennzeichnet, dass** die Bewegungseinheit (10) die Vorrichtung (2) und/oder das Objekt (20) bewegt, wobei bevorzugt bei einer Bewegung des Objekts (20) eine Halterung zur Aufnahme des Objekts (20) vorgesehen ist, die von der Bewegungseinheit (10) bewegt wird.

4. Vorrichtung oder System nach einem der vorhergehenden Ansprüche, **dadurch gekennzeichnet, dass** der Strahlteiler (91) und/oder der Strahlaufspalter (82) ein halbdurchlässiger Spiegel ist.

5. Vorrichtung oder System nach einem der vorhergehenden Ansprüche, **dadurch gekennzeichnet, dass** ein Objektiv (50) im Strahlengang vorgesehen ist, das Lichtstrahlen (84, 400) derart lenkt, dass der polarisierte Ellipsometrie-Lichtstrahl (420) unter einem vorbestimmten Winkel auf den Messbereich auf der Objektoberfläche (40) trifft und der Messstrahl (430) in einem rechten Winkel auf den Messbereich auf der Objektoberfläche (40) trifft.

6. Vorrichtung oder System nach einem der vorhergehenden Ansprüche, **dadurch gekennzeichnet, dass** Spiegel (70, 72, 74, 76) im Strahlengang des Ellipsometrie-Lichtstrahls (420) vorgesehen ist, die den Ellipsometrie-Lichtstrahl (420) senkrecht auf den Polarisator (190) lenken und/oder den Sensorstrahl (520) senkrecht auf die Ellipsometriesensoren (220, 222, 224) lenken.

7. Vorrichtung oder System nach dem vorhergehenden Anspruch, **dadurch gekennzeichnet, dass** im Strahlengang vor der Detektoreinheit (250) eine Tubusoptik (260) vorgesehen ist, die den Auswertungsstrahl (490) auf der Detektoreinheit (250) fokussiert und/oder im Strahlengang vor dem Ellipsometriesensor (220, 222, 224) eine Tubusoptik (230, 232, 234) vorgesehen ist, die den Sensorstrahl (520) auf dem Ellipsometriesensor (220, 222, 224) fokussiert.

8. System nach einem der vorhergehenden Ansprüche, **dadurch gekennzeichnet, dass** die Lichtquelle (111) eine Laserdiode (110, 120, 130) ist.

9. System nach einem der vorhergehenden Ansprüche, **dadurch gekennzeichnet, dass** die Lichtquelle (111) eine Monitordiode (140, 150, 160) hat, mittels der die Ausgangsintensität der Lichtquelle (111) bestimmt und überwacht wird.

10. System nach einem der vorhergehenden Ansprüche 2 bis 8, **dadurch gekennzeichnet, dass** mehrere Lichtquellen (111) zur Erzeugung von monochromatischen Lichtstrahlen (84, 400) vorgesehen sind, deren Lichtstrahlen (84, 400) bevorzugt unterschiedliche Wellenlängen aufweisen und bevorzugt keine Wellenlänge eines Lichtstrahls (84, 400) ein ganzzahliges Vielfaches der Wellenlänge eines anderen Lichtstrahls (84, 400) ist und deren Lichtstrahlen (84, 400) bevorzugt mittels einer Strahlformungsoptik (80) gebündelt werden.

11. System nach dem vorhergehenden Anspruch, **dadurch gekennzeichnet, dass** das System (1) mehrere Ellipsometriesensoren (220, 222, 224) für die Ermittlung des Polarisationszustands eines empfangenden Sensorstrahls (520) umfasst, bevorzugt dass für jede Wellenlänge der vorhandenen Lichtstrahlen ein Ellipsometriesensor (220, 222, 224) vorhanden ist.

12. Vorrichtung oder System nach dem vorhergehenden Anspruch, **dadurch gekennzeichnet, dass** die Vorrichtung (2) ein optisches Auftrennelement (600) zum wellenlängenspezifischen Auftrennen des Sensorstrahls (520) umfasst, das derart angeordnet ist, dass die Auftrennung des Sensorstrahls (520) vor deren Auftreffen auf die Ellipsometriesensoren (220, 222, 224) erfolgt.

13. System nach einem der vorhergehenden Ansprüche, **dadurch gekennzeichnet, dass** der Ellipsometriesensor (220, 222, 224) mehrere, bevorzugt vier, Polarisationsfilter derart umfasst, dass zur Analyse des Polarisationszustands eines empfangenen Sensorstrahls (520) mehrere, bevorzugt vier, Polarisationsrichtungen aufgenommen und ausgewertet werden, bevorzugt gleichzeitig.

14. Vorrichtung oder System nach dem vorhergehenden Anspruch, **dadurch gekennzeichnet, dass** das optische Auftrennelement (600) ein dichroitischer Spiegel (610, 620) ist.

15. Vorrichtung oder System nach einem der vorhergehenden Ansprüche, **dadurch gekennzeichnet, dass** die Detektoreinheit (250) eine Time-Delayed-Integration-Kamera umfasst, bevorzugt eine Farb-Time-Delayed-Integration-Kamera, besonders bevorzugt eine Time-Delayed-Integration-Mehrkanal-Zeilenkamera.

16. Vorrichtung oder System nach einem der vorhergehenden Ansprüche, **dadurch gekennzeichnet, dass** der Ellipsometriesensor (220, 222, 224) eine Time-Delayed-Integration-Kamera umfasst, bevorzugt eine Time-Delayed-Integration-Zeilenkamera, weiter bevorzugt eine Mehrkanal-Time-Delayed-Integration-Zeilenkamera, besonders bevorzugt eine Vierkanal-Time-Delayed-Integration-Zeilenkamera, die bevorzugt vier Polarisationsfilter umfasst.

17. Vorrichtung oder System nach einem der vorhergehenden Ansprüche, **dadurch gekennzeichnet, dass** in der Auswerteeinheit eine Korrektur der Messergebnisse der Detektoreinheit (250) erfolgt, bevorzugt mittels eines mit dem Ellipsometrie-Messsystem (5) ermittelten effektiven Brechungsindexes und/oder effektiven Absorptionskoeffizienten des zu vermessenden Objekts (20) und/oder mittels einer effektiven Schichtdicke einer Ersatzschicht, welche die effektive, optische Wirkung von ein oder mehreren Schichten des Objektes (20) zusammenfasst.

18. Verfahren zum Erfassen des Oberflächenprofils einer Objektoberfläche (40) eines Objekts mit unbekannten Materialien, mittels einer interferometrischen Messung und einer Ellipsometrie-Messung, umfassend die folgenden Schritte:

Aussenden eines monochromatischen Lichtstrahls (84, 400) in Richtung einer optischen Vorrichtung (2) mittels einer Lichtquelle (111);
Aufspalten des Lichtstrahls (84, 400) der Lichtquelle (111) in einen Interferometrie-Lichtstrahl (410) und einen Ellipsometrie-Lichtstrahl (420) mittels eines Strahlaufspalters (82);
Durchführen einer interferometrischen Messung mit dem Interferometrie-Lichtstrahl (410) an einem Messbereich der Objektoberfläche (40) mittels eines optischen Interferometrie-Messsystems (111);
Durchführen einer Messung eines Monitorsignals der Lichtquelle (111) zur Bestimmung der Ausgangsintensität der Lichtquelle (111);
Durchführen einer Ellipsometrie-Messung an dem Messbereich der Objektoberfläche (40) mittels eines optischen Ellipsometrie-Messsystems (5);
Berechnung von Korrekturparametern mit den Ergebnissen der Ellipsometrie-Messung und unter Berücksichtigung der Ausgangsintensität der Lichtquelle (111);
Korrektur der mit der Interferometrie-Messung ermittelten Messwerte mittels der Korrekturparameter;
Bestimmung der Profilhöhe des Messbereichs an der Oberfläche unbekannten Materials des Objekts (20) unter Berücksichtigung der korrigierten Messwerte mittels einer Auswerteeinheit.

**19.** Verfahren nach dem vorhergehenden Anspruch, **dadurch gekennzeichnet, dass** die Korrekturparameter einen effektiven Brechungsindex und/oder einen effektiven Absorptionskoeffizient und/oder eine effektive Schichtdicke einer Ersatzschicht, welche die effektive, optische Wirkung von ein oder mehreren Schichten des Objektes (20) zusammenfasst, der gerade vermessenen Materialkombination an jedem Messpunkt umfassen.

EP 3 812 697 A1

**Fig. 1**

24

**Fig. 2**

Fig. 3

Fig. 4

# Fig. 5

**Einmalig vor Start der Messungen**

```
Dunkelmessung
        │
        ▼
Einstellung
von Lichtquelle und Belichtungszeit
        │
        ▼
Hellsignalmessung bei
Fokusabstand zur Bestimmung
Gerätekonstante $\gamma_e$ für den
Ellipsometriekanal
        │
        ▼
```

Hellsignalmessung bei Probenabstand $z_i$

Wiederholung bis für alle genutzten Wellenlängen ein komplette Wellenlänge durchlaufen wurde

Änderung des Probenabstandes um Schritt dz

Bestimmung des maximalen gemessenen Signals ($= M^{max}$)

Messdurchläufe

# Fig. 6

## Messdurchlauf

Unveränderte Einstellung
von Lichtquelle und Belichtungszeit
aus Vorbereitungsmessung

Ellipsometrie-Messung

Interferometrie-Messung

Berechnung von $n_{eff}$, $k_{eff}$, $d_{eff}$

Berechnung der
materialbedingten Reflexion
und Phasenverschiebung für
Interferometriesignal

Berechnung der
Abstandsdifferenz
Referenzsignal zu
Teilerspiegel -
Probenoberfläche zu
Teilerspiegel

Wiederholung für alle
gewünschten Scan-Zeilen

Ausgabe des Höhenprofiles

Fig. 7

**Europäisches Patentamt**
**European Patent Office**
**Office européen des brevets**

# EUROPÄISCHER RECHERCHENBERICHT

Nummer der Anmeldung

EP 19 20 5397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 856 384 B1 (ROVIRA PABLO I [US]) 15. Februar 2005 (2005-02-15) * Spalte 1, Zeile 49 - Zeile 67; Anspruch 2; Abbildungen 4,5A,6,8 * * Spalte 4, Zeile 36 - Zeile 44 * * Spalte 5, Zeile 23 * * Spalte 5, Zeile 37 - Spalte 6, Zeile 51 * * Spalte 7, Zeile 6 - Zeile 19 * * Spalte 7, Zeile 27 - Zeile 36 * ----- | 1-19 | INV. G01B9/02 G01B11/06 G01N21/21 |
| A | US 5 793 480 A (LACEY CHRISTOPHER A [US] ET AL) 11. August 1998 (1998-08-11) * Zusammenfassung; Abbildung 3 * ----- | 1,13,18 | |
| A | YOUNG HO YUN ET AL: "Novel combined measurement system to characterize film structures by spectral interferometry and ellipsometry", OPTICS EXPRESS, Bd. 26, Nr. 26, 24. Dezember 2018 (2018-12-24), Seite 34396, XP055688470, US ISSN: 1094-4087, DOI: 10.1364/OE.26.034396 * Zusammenfassung; Abbildungen 1,2 * ----- | 1,18 | RECHERCHIERTE SACHGEBIETE (IPC) G01B G01N |
| A | ZHAN Q ET AL: "MICROELLIPSOMETER WITH RADIAL SYMMETRY", APPLIED OPTICS, OPTICAL SOCIETY OF AMERICA, WASHINGTON, DC, US, Bd. 41, Nr. 22, 1. August 2002 (2002-08-01), Seiten 4630-4637, XP001131419, ISSN: 0003-6935, DOI: 10.1364/AO.41.004630 * Kapitel 5 * ----- | 18 | |

Der vorliegende Recherchenbericht wurde für alle Patentansprüche erstellt

| Recherchenort | Abschlußdatum der Recherche | Prüfer |
|---|---|---|
| München | 23. April 2020 | Biedermann, Benjamin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 5397

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2020

| Im Recherchenbericht angeführtes Patentdokument | Datum der Veröffentlichung | Mitglied(er) der Patentfamilie | Datum der Veröffentlichung |
|---|---|---|---|
| US 6856384 B1 | 15-02-2005 | KEINE | |
| US 5793480 A | 11-08-1998 | AU 6689896 A | 27-03-1997 |
| | | US 5638178 A | 10-06-1997 |
| | | US 5793480 A | 11-08-1998 |
| | | WO 9709604 A1 | 13-03-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 19188318 A

**In der Beschreibung aufgeführte Nicht-Patentliteratur**

- **K. MEINERS-HAGEN ; R. SCHRÖDEL ; F. POLLINGER ; A. ABOU-ZEID.** Multi-Wavelength Interferometry for Length Measurements Using Diode Lasers. *Measurement Science Review,* 01. November 2009, vol. 9

- **HARLAND G. TOMPKINS ; EUGENE A. IRENE.** Handbook of Elliposmetry. Springer, 2005